(19) Europäisches Patentamt

European Patent Office

Office européen des brevets

(11) **EP 0 973 336 A2**

(12) **EUROPEAN PATENT APPLICATION**

(43) Date of publication:
**19.01.2000 Bulletin 2000/03**

(51) Int. Cl.$^7$: **H04N 7/26**

(21) Application number: **99113869.4**

(22) Date of filing: **15.07.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **15.07.1998 JP 20046098**
**28.07.1998 JP 21237898**
**06.08.1998 JP 22339798**
**06.08.1998 JP 22339898**

(71) Applicant: **SONY CORPORATION**
**Tokyo (JP)**

(72) Inventors:
• **Ando, Yuji,c/o Sony Corporation**
**Shinagawa-ku, Tokyo (JP)**
• **Yasuda, Hiroyuki,c/o Sony Corporation**
**Shinagawa-ku, Tokyo (JP)**

(74) Representative:
**Melzer, Wolfgang, Dipl.-Ing. et al**
**Patentanwälte**
**Mitscherlich & Partner,**
**Sonnenstrasse 33**
**80331 München (DE)**

(54) **Motion vector detecting, picture encoding and recording method and apparatus**

(57) A moving vector calculating method is disclosed, that comprises the steps of (a) extracting a block from a reference picture corresponding to a block of a current picture to be processed, the size of the block of the reference picture being the same as the size of the block of the current picture, the origin of the block of the reference picture matching the origin of the block of the current picture, (b) while moving the block of the reference picture in a predetermined search area, obtaining a residual between the block of the current picture and the block of the reference picture, (c) detecting a block with the minimum residual from the reference picture so as to calculate a moving vector, (d) orthogonally transforming pixel data of a block of the reference picture and pixel data of a block of the current picture, and (e) obtaining a residual between orthogonally transformed data of the block of the reference picture and orthogonally transformed data of each block of the current picture.

Fig. 15

EP 0 973 336 A2

**Description**

BACKGROUND OF THE INVENTION

Field of the Invention

The present invention relates to a moving vector calculating method suitable for performing an encoding process corresponding to for example MPEG (Moving Picture Experts Group) 2 method by software process. The present invention also relates to a record medium on which a moving vector calculating program has been recorded.

Description of the Related Art

As a highly efficient compressing method for a picture, MPEG2 method has become common. In the MPEG2 method, a video signal is compressed and encoded by a motion compensation predictive encoding method and DCT (Discrete Cosine Transform) method.

In the MPEG2 method, three types of pictures that are an I (Intra) picture, a P (Predictive) picture, and a B (Bidirectionally Predictive) picture are transmitted. For an I picture, DCT encoding process is performed with pixels of the same frame. For a P picture, with reference to an I picture or a P picture that has been encoded, DCT encoding process is performed using motion compensation predicting process. For a B picture, with reference to I pictures or P pictures that precede and follow the B picture, DCT encoding process is performed using motion predicting process.

For a P picture or a B picture, an intra-encoding process may be performed for each macro block. In other words, when a picture contains many DC components, the picture can be effectively compressed by the intra-encoding process. Thus, in this case, the intra-encoding process is performed.

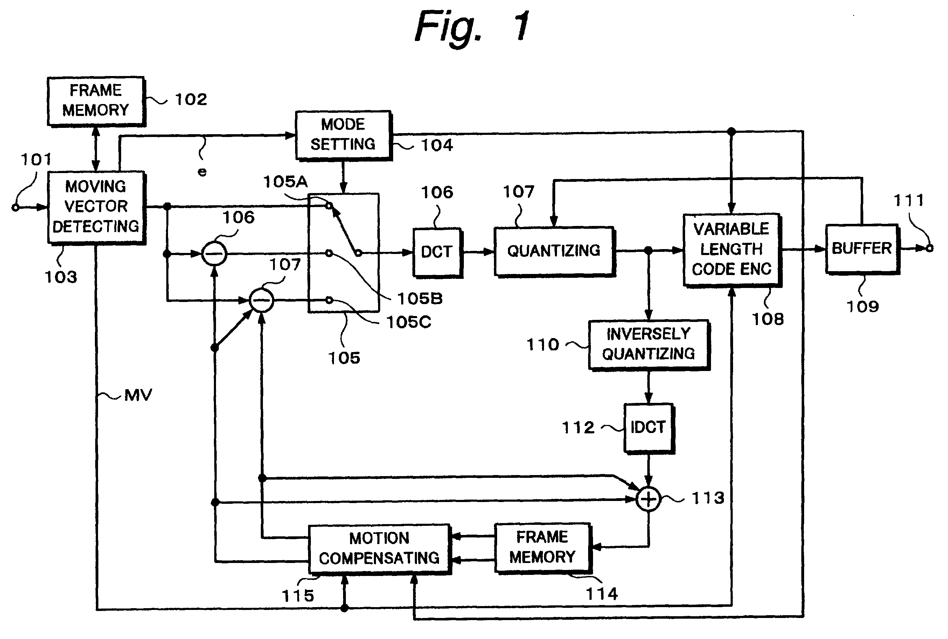

Fig. 1 is a block diagram showing an example of the structure of a conventional MPEG2 encoder. Referring to Fig. 1, a component digital video signal is supplied to an input terminal 101. The component digital video signal is composed of a luminance signal Y and color difference signals Cb and Cr. The digital video signal is supplied from the input terminal 101 to a frame memory 102 through a moving vector detecting circuit 103. The frame memory 102 temporarily stores the digital video signal. The frame memory 102 has a storage capacity for at least three frames of pictures of a current picture, a past reference picture, and a future reference picture.

The moving vector detecting circuit 103 obtains a moving vector between a reference picture and a current picture using data stored in the frame memory 102. A moving vector MV is obtained for each macro-block. Each macro-block is composed of for example (16 x 16) pixels. The obtained moving vector MV is supplied to a variable length code encoding circuit 108 and a motion compensating circuit 115. The motion vector detecting circuit 103 supplies residual information e to a mode setting circuit 104. The residual information e is obtained along with the moving vector MV by the moving vector detecting circuit 103.

An output signal of the frame memory 102 is supplied to a terminal 105A of a switch circuit 105 through the moving vector detecting circuit 103. In addition, the output signal of the frame memory 102 is supplied to a subtracting circuit 106 and a subtracting circuit 107. An output signal of the subtracting circuit 106 is supplied to a terminal 105B of the switch circuit 105. An output signal of the subtracting circuit 107 is supplied to a terminal 105C of the switch circuit 105.

The switch circuit 105 changes an encoding mode corresponding to a mode set signal received from the mode setting circuit 104. In other words, in intra-frame encoding mode, the switch circuit 105 selects the terminal 105A. In the forward predictive encoding mode, the switch circuit 105 selects the terminal 105B. In the bidirectionally predictive encoding mode, the switch circuit 105 selects the terminal 105C.

When an I picture is transmitted, the intra-frame predictive encoding process is performed. At this point, the switch circuit 105 selects the terminal 105A. The frame memory 102 outputs picture data of the current frame. The picture data of the current frame is supplied to a DCT circuit 106 through the switch circuit 105.

For example, the DCT circuit 106 transforms a video signal of each block of (8 x 8) pixels in a time region into spectrum data in a frequency region. The spectrum data is zigzag-scanned and read from lower frequency components to higher frequency components (namely, from DC components). An output signal of the DCT circuit 106 is supplied to a quantizing circuit 107.

A quantizing scale is set to the quantizing circuit 107 corresponding to information of an output bit rate received from a transmission buffer 109. The quantizing circuit 107 quantizes spectrum data received from the DCT circuit 106 corresponding to the quantizing scale. Thus, the bit rate of the output bit stream is kept constant.

An output signal of the quantizing circuit 107 is supplied to both the variable length code encoding circuit 108 and an inversely quantizing circuit 110. The variable length code encoding circuit 108 encodes the spectrum data (received from the quantizing circuit 107), the moving vector, the quantizing scale, and the prediction mode with variable length code.

The variable length code encoding circuit 108 outputs an encoded bit stream. The encoded bit stream is temporarily stored to the transmission buffer 109. A data stream is read from the transmission buffer 109 corresponding to a required bit rate.

As described above, the output signal of the quantizing circuit 107 is supplied to the inversely quantizing circuit 110. An output signal of the inversely quantizing circuit 110 is supplied to an IDCT circuit 112. In the case of an I picture, the DCT process is performed with pixels of the same frame. Thus, the inversely quantizing circuit 110 and the IDCT circuit 112 form the original picture. Digital video data for one picture is supplied to a picture frame memory 114 through an adding circuit 113. Data stored in the frame memory 114 is used for data of a reference frame of the next P picture or B picture.

When a P picture is transmitted, a forward predictive encoding process is performed with a reference frame. At this point, the switch circuit 105 selects the terminal 105B. The frame memory 102 outputs a digital video signal of the current frame. An output signal of the frame memory 102 is supplied to the subtracting circuit 108.

The frame memory 114 stores data of a reference frame. The motion compensating circuit 115 compensates the motion of the data of the reference frame and supplies the resultant data to the subtracting circuit 106. The subtracting circuit 106 obtains the difference between data of the current frame and data of the reference frame that has been motion-compensated. The difference data is supplied to the DCT circuit 106 through the switch circuit 105.

The DCT circuit 106 performs the DCT process for the difference data. Namely, the DCT circuit 106 transforms the difference data into spectrum data. An output signal of the DCT circuit 106 is supplied to the quantizing circuit 107. The quantizing circuit 107 quantizes the spectrum data received from the DCT circuit 106.

An output signal of the quantizing circuit 107 is supplied to both the variable length code encoding circuit 108 and the inversely quantizing circuit 110. The variable length code encoding circuit 108 encodes the spectrum data (received from the quantizing circuit 107), the moving vector, the quantizing scale, and the prediction mode with variable length code.

The variable length code encoding circuit 108 outputs an encoded bit stream. The encoded bit stream is temporarily stored in the transmission buffer 109. A data stream is read from the transmission buffer 109 corresponding to a required bit rate. The data stream is obtained from an output terminal 111.

An output signal of the quantizing circuit 107 is supplied to the inversely quantizing circuit 110. An output signal of the inversely quantizing circuit 110 is supplied to the IDCT circuit 112. In the case of a P picture, the DCT process is performed for the difference between data of a reference frame and data of the current picture. Thus, the quantizing circuit 110 and the IDCT circuit 112 obtain the difference between data of the reference frame and data of the current picture. The difference data is supplied to the adding circuit 113.

The frame memory 114 supplies data of a reference picture to the adding circuit 113 through the motion compensating circuit 115. The adding circuit 113 adds the difference data to the data of the reference picture. An output signal of the adding circuit 113 is stored as data of the next reference frame to the frame memory 114.

When a B picture is transmitted, with a past reference frame and a future reference frame, bidirectionally predictive encoding process is performed. In this case, the switch circuit 105 selects the terminal 105C. The frame memory 102 outputs a digital video signal of the current frame. The output signal of the frame memory 102 is supplied to the subtracting circuit 107.

The frame memory 114 stores data of a past reference frame and data of a future reference frame. The motion compensating circuit 115 motion-compensates the data of both the reference frames. An output signal of the motion compensating circuit 115 is supplied to the subtracting circuit 107. The subtracting circuit 107 obtains the difference among the data of the current frame, the data of the past reference frame, and the data of the future reference frame that have been motion-compensated. The difference data is supplied to the DCT circuit 106 through the switch circuit 105.

The DCT circuit 106 performs the DCT process for the difference data. In other words, the DCT circuit 106 transforms the difference data into spectrum data. An output signal of the DCT circuit 106 is supplied to the quantizing circuit 107. The quantizing circuit 107 quantizes the spectrum data received from the DCT circuit 106.

An output signal of the quantizing circuit 107 is supplied to both the variable length code encoding circuit 108 and the inversely quantizing circuit 110. The variable length code encoding circuit 108 encodes the spectrum data (received from the quantizing circuit 107), the moving vector, the quantizing scale, and the prediction mode with variable length code.

The variable length code encoding circuit 108 outputs an encoded bit stream. The bit stream is temporally stored to the transmission buffer 109. The transmission buffer 109 reads data stream corresponding to a required bit rate. The data stream is obtained from the output terminal 111.

In recent years, since the process speeds of CPUs (Central Processing Units) are becoming very fast and memories with large storage capacity are becoming inexpensive, the above-described MPEG2 encoder can be performed by software.

However, in the MPEG2 encoding process, a process for calculating a moving vector is required. A moving vector is obtained by a block matching process. In other words, a block with the same size and the same origin as a block divided from the current frame to be processed is extracted from a reference frame. While the block of the reference frame is being moved in a predetermined search area, the sum of the absolute values of the difference values between pixels of the block of the reference frame and pixels of the relevant block of the current frame is obtained as a residual. A block of the reference frame with the minimum residual is obtained. Since the block matching process requires many calculating steps, it is difficult to perform the MPEG2 encoding process by software.

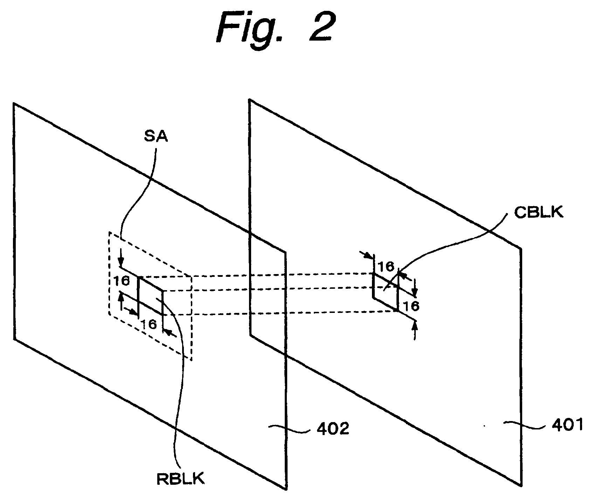

In other words, when the moving vector of a block CBLK of a current frame 401 shown in Fig. 2 is obtained, a search area SA is defined on the periphery of a block RBLK of the reference frame 402 corresponding to the block CBLK as an origin. The block RBLK of the reference frame is extracted from the search area SA. The difference values between (16 x 16) pixels of the reference block RBLK and (16 x 16) pixels of the current block CBLK are obtained. The sum of the absolute values of the difference values is obtained as a residual. The block RBLK of the reference frame 402 is moved in the predetermined search area SA. At each position of the block RBLK in the search area SA, the difference values between pixels of the block RBLK and pixels of the block CBLK of the current frame 401 are obtained. The sum of the absolute values of the difference values is obtained as a residual. The obtained sums are compared. A block with the minimum residual is treated as a matched block. With the matched block, a moving vector is obtained.

To detect a moving vector by the block matching process, when each block is composed of (16 x 16) pixels, to obtain difference values of pixels, 16 x 16 = 256 subtracting operations are required. To obtain the sum of the absolute values of the difference values, 256 adding operations are required.

When a moving vector is detected by moving a reference block in a predetermined search area at one pixel step, residuals should be obtained a number of times corresponding to the number of pixels in the search area. Thus, when residuals are obtained by moving a block in a predetermined search area at one pixel step and a moving vector is detected with the position of a block with the minimum residual, the number of calculating steps becomes huge. Thus, it is difficult to perform the MPEG2 encoding process by software.

To search a moving vector at high speed, two approaches can be considered. As the first approach, whenever the block matching process is performed, the number of calculating steps is decreased. As the second approach, the number of times of the block matching process in a search area is decreased.

As an example of the first approach, while the sum of the absolute values of the difference values between pixels of a block of the reference frame and pixels of the relevant block of the current frame is being calculated, the sum is compared with a predetermined threshold value. Then the sum is larger than the predetermined threshold value, the process is terminated.

Since a moving vector is obtained by obtaining the minimum value of the sum of the absolute values of the difference values between pixels of a block of the reference frame and pixels of the relevant block of the current frame. Thus, when the sum exceeds the predetermined threshold value, the sum does not become the minimum value. Thus, it is meaningless to continue the process. Consequently, when the sum is larger than the predetermined threshold value, the process is terminated. As a result, the number of calculating steps can be decreased and a moving vector can be detected at high speed.

However, in this case, it is difficult to assign such a threshold value. Then the threshold value is too small, the process is terminated at all points. Thus, a moving vector cannot be correctly detected. In contrast, when the threshold value is too large, since the process is not terminated, the efficiency of the process cannot be improved.

To decrease the number of calculating steps for the block matching process, a method for thinning out pixels of a reference frame and pixels of a current frame checkerwise. In this case, the number of calculating steps for calculating the sum of the absolute values of the difference values can be halved.

However, when blocks are thinned out checkerwise, since the continuity of data of pixels is lost, an MMX instruction cannot be used. Since an MMX instruction allows a plurality of successive data pieces to be processed at a time, recent personal computers are equipped with CPUs that handle an MMX function. Since the block matching process obtains the sum of the absolute values of the difference values between pixels, with an MMX instruction, the block matching process can be performed at high speed. However, when pixels of blocks are thinned out checkerwise, since the continuity of data of pixels is lost, an MMX instruction cannot be used. Thus, even if pixels of blocks are thinned out checkerwise and thereby the number of times of the block matching process is decreased, the process time cannot be remarkably shortened. As a conventional moving picture encoding apparatus that encodes picture data of a moving picture, a hybrid encoding process that is a combination of motion compensated inter-frame predicting process and DCT (Discrete Cosine Transform) process is performed for each block of (8 x 8) pixels.

The moving picture encoding apparatus detects a moving vector between adjacent frames and motion-compensates the moving picture with the detected moving vector so as to decrease the amount of encoded data.

Conventional moving picture encoding apparatuses detect the motion of a picture in various methods. When the motion of a picture is detected, macro blocks at a relevant position of adjacent frames are sometimes compared. When the macro blocks are compared, the moving direction of the picture is unknown. Thus, the predetermined area around the relevant position of the adjacent frames is searched for macro blocks with a small difference of luminance values.

When a camera that photographs a moving picture is fixed at a predetermined position and an object is being moved, the moving direction of the object varies at each position of the entire picture. Thus, macro blocks around a start point are searched. When the motion of the object is large, it may deviate from the search area. In this case, the intra-frame encoding process is performed instead of the inter-frame encoding process.

In a conventional moving picture encoding apparatus, a hierarchical searching method has been proposed so as to decrease the number of calculating steps for detecting the motion of a picture. In this method, the motion of a picture is detected so that one moving vector is detected with a plurality of macro blocks. To obtain a moving vector of each macro block, the moving vector for the plurality of macro blocks is used.

However, in such a moving picture encoding apparatus, macro blocks are searched in a predetermined area so as to detect macro blocks whose difference is small. Thus, when an object that largely moves is processed, it is necessary to widen the search area. Therefore, the process time necessary for detecting the motion of a picture exponentially increases.

In the moving picture encoding apparatus, when the motion of an object is large, the intra-frame encoding process (for macro blocks of the same frame) is performed instead of the inter-frame encoding process (for macro blocks of a plurality of frames). In this case, when the motion of a photographed picture exceeds a predetermined search area, if the intra-frame encoding process is performed for all macro blocks, the number of calculating steps increases. Thus, the load of the apparatus becomes large. This situation takes place in the case that when an object is panned if the entire picture moves in excess of the search area.

In a moving picture encoding apparatus that obtains moving vectors of a plurality of macro blocks, when the picture largely moves in excess of the screen, a moving vector cannot be detected. Thus, moving vectors of a plurality of macro blocks cannot be detected.

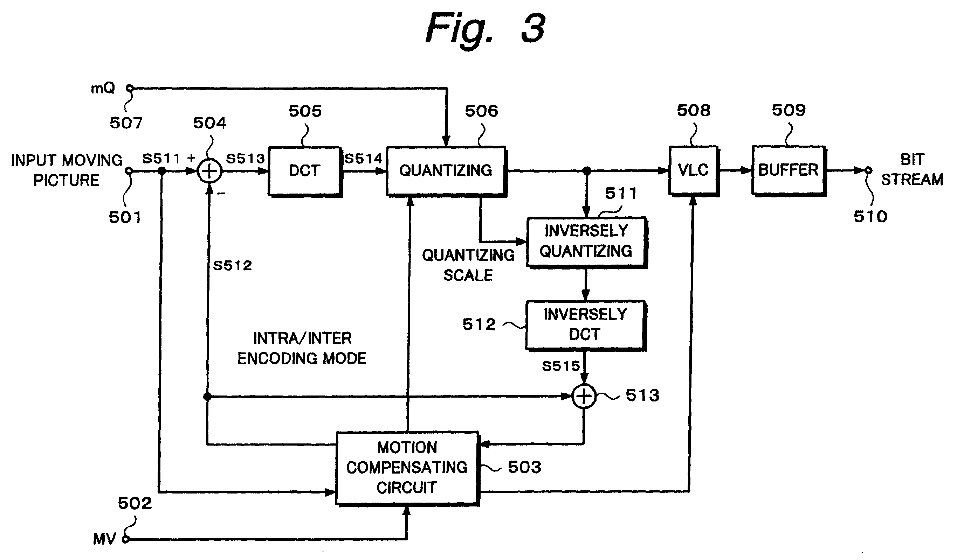

Fig. 3 shows an example of the structure of a conventional moving picture encoding apparatus that encodes picture data of a moving picture by a hybrid encoding process that is a combination of a motion compensation inter-frame predicting process and a DCT (Discrete Cosine Transform) process.

In Fig. 3, an input MB (Macro Block) signal S11 is supplied to a terminal 501. A moving vector signal MV is supplied as macro blocks MB one by one to a terminal 502. The input MB signal S511 and the moving vector signal MV are supplied to a motion compensating circuit 503.

The motion compensating circuit 503 has an internal picture memory. A predictive picture signal (hereinafter referred to as predictive MB signal) is read as macro blocks MB one by one from the picture memory corresponding to the moving vector signal MV. The motion compensating circuit 503 outputs a signal S512 that is the predictive MB signal obtained from the motion vector signal MV.

A calculating device 504 adds the input MB signal S511 that is an addition signal and the signal S512 that is a subtraction signal as macro blocks MB one by one. Thus, the calculating device 504 calculates the difference between the input MB signal and the signal S512 and outputs the difference as a predictive residual MB signal S513.

The predictive residual MB signal S513 is supplied to a DCT circuit 505. The DCT circuit 505 performs a two-dimensional DCT process for each block of (8 x 8) pixels of the predictive residual MB signal S513 and outputs a DCT coefficient. The DCT coefficient is supplied to a quantizing circuit 506.

The quantizing circuit 506 quantizes the DCT coefficient corresponding to a quantizing scale mQ received from a terminal 507, the difference of the absolute value of the predictive MB signal received from the motion compensating circuit 503, and the difference between the absolute value and the mean value and outputs the resultant signal as a quantized signal.

The quantized signal received from the quantizing circuit 506 and a moving vector MV corresponding thereto are supplied to a variable length code encoding (VLC) circuit 508. The variable length code encoding circuit 508 encodes the quantized signal and the moving vector MV with variable length code corresponding to MPEG syntax.

An output signal of the variable length code encoding circuit 508 is supplied to a buffer memory 509. The buffer memory 509 smooths the fluctuation of the number of bits of data that is generated in a short time period and received from the variable length code encoding circuit 508 and outputs an encoded bit stream at a desired bit rate. The encoded bit stream that is received from the buffer memory 509 is output from a terminal 510.

The quantized signal and the quantizing scale received from the quantizing circuit 506 are supplied to an inversely quantizing circuit 511. The inversely quantizing circuit 511 inversely quantizes the quantized signal corresponding to the quantizing scale. An output signal of the inversely quantizing circuit 511 is supplied to an inversely DCT circuit 512. The inversely DCT circuit 512 performs an inversely DCT process for the signal received from the inversely quantizing circuit 511 and outputs the resultant signal as a predictive residual MB signal S515 to a calculating device 513.

The calculating device 513 also receives the predictive MB signal S512 that is supplied to the calculating device 504. The calculating device 513 adds the predictive residual MB signal S515 and the predictive MB signal S512 and outputs a locally decoded picture signal. This picture signal is the same as an output signal of the receiver side (decoder side).

The conventional moving picture encoding apparatus performs the DCT process and the quantizing process for all pictures received from the terminal 501. The moving picture encoding apparatus determines whether or not the DCT coefficient of each macro block of the picture to be encoded is present after performing the DCT process and the quantizing process for the picture data and completing all calculating steps for the DCT coefficient.

However, since the moving picture encoding apparatus performs the calculating steps for all macro blocks even if their DCT coefficients finally become "0", unnecessary calculating steps should be performed.

In addition, since the conventional moving picture encoding apparatus determine whether or not all DCT coefficients of macro blocks are "0" only after performing all calculating steps, all the calculating steps should be performed.

OBJECTS AND SUMMARY OF THE INVENTION

The present invention is made from the above-described point of view.

A first object of the present invention is to decrease the number of calculating steps of the block matching process for detecting a moving vector and to detect it at high speed.

A second object of the present invention is to provide a moving vector calculating method and a record medium on which a program thereof has been recorded, the moving vector calculating method allowing the number of times of the block matching process in a predetermined search area to be decreased so as to increase the process speed and an MMX instruction to be effectively used.

A third object of the present invention is to provide a motion detecting apparatus and a motion detecting method that allow a moving vector of a picture that largely moves on the entire screen to be detected.

A fourth object of the present invention is to provide a picture encoding apparatus and a picture encoding method that allow a time period of an encoding process for a picture whose DCT coefficient finally becomes "0" to be shortened.

A first aspect of the present invention is a moving vector calculating method, comprising the steps of (a) extracting a block from a reference picture corresponding to a block of a current picture to be processed, the size of the block of the reference picture being the same as the size of the block of the current picture, the origin of the block of the reference picture matching the origin of the block of the current picture, (b) while moving the block of the reference picture in a predetermined search area, obtaining a residual between the block of the current picture and the block of the reference picture, (c) detecting a block with the minimum residual from the reference picture so as to calculate a moving vector, (d) orthogonally transforming pixel data of a block of the reference picture and pixel data of a block of the current picture, and (e) obtaining a residual between orthogonally transformed data of the block of the reference picture and orthogonally transformed data of each block of the current picture.

A second aspect of the present invention is a record medium on which a moving vector calculating program has been recorded, the moving vector calculating program causing a system that has the record medium to perform the steps of (a) extracting a block from a reference picture corresponding to a block of a current picture to be processed, the size of the block of the reference picture being the same as the size of the block of the current picture, the origin of the block of the reference picture matching the origin of the block of the current picture, (b) while moving the block of the reference picture in a predetermined search area, obtaining a residual between the block of the current picture and the block of the reference picture, (c) detecting a block with the minimum residual from the reference picture so as to calculate a moving vector, (d) orthogonally transforming pixel data of a block of the reference picture and pixel data of a block of the current picture, and (e) obtaining a residual between orthogonally transformed data of the block of the reference picture and orthogonally transformed data of each block of the current picture.

A third aspect of the present invention is a moving vector calculating method, comprising the steps of (a) extracting a block from a reference picture corresponding to a block of a current picture to be processed, the size of the block of the reference picture being the same as the size of the block of the current picture, the origin of the block of the reference picture matching the origin of the block of the current picture, (b) while moving the block of the reference picture in a predetermined search area, obtaining a residual between the block of the current picture and the block of the reference picture, (c) detecting a block with the minimum residual from the reference picture so as to calculate a moving vector, (d) while calculating a residual between pixels of a block of the reference picture and pixels of a block of the current picture, comparing the obtained residual with a predetermined threshold value, and (e) when the residual is larger than the predetermined threshold value, stopping the calculation of the moving vector, and (f) setting the initial value of the predetermined threshold value corresponding to a characteristic of a picture.

A forth aspect of the present invention is a record medium on which a moving vector calculating program has been recorded, the moving vector calculating program causing a system that has the record medium to perform the steps of (a) extracting a block from a reference picture corresponding to a block of a current picture to be processed, the size of the block of the reference picture being the same as the size of the block of the current picture, the origin of the block of the reference picture matching the origin of the block of the current picture, (b) while moving the block of the reference picture in a predetermined search area, obtaining a residual between the block of the current picture and the block of the reference picture, (c) detecting a block with the minimum residual from the reference picture so as to calculate a moving vector, (d) while calculating a residual between pixels of a block of the reference picture and pixels of a block of the current picture, comparing the obtained residual with a predetermined threshold value, and (e) when the residual is larger than the predetermined threshold value, stopping the calculation of the moving vector, and (f) setting the initial value of the predetermined threshold value corresponding to a characteristic of a picture.

A fifth aspect of the present invention is a motion detecting apparatus, comprising an extracting means for extracting a plurality of macro blocks from a picture, a first motion detecting means for detecting a moving vector of each of the plurality of macro blocks extracted by the extracting means, a motion calculating means for calculating a moving vector of the entire picture with moving vectors of individual macro blocks detected by the first motion detecting means, and a second motion detecting means for calculating a moving vector of each macro block with the moving vector calculated by the motion calculating means.

A sixth aspect of the present invention is a motion detecting method, comprising the steps of (a) extracting a plurality of macro blocks from a picture, (b) detecting a moving vector of each of the plurality of macro blocks that have been extracted, (c) calculating a moving vector of the entire picture with moving vectors of individual macro blocks that have been detected, and (d) calculating a moving vector of each macro block with the moving vector that have been calculated.

A seventh aspect of the present invention is a picture encoding apparatus, comprising a motion detecting means for detecting a moving vector of a predetermined pixel block of input picture data and generating motion residual information, a determining means for comparing the motion residual information received from the motion detecting means with a predetermined value and generating a determined result, a picture data process means for performing a predetermined process for picture data, the predetermined process being required for an encoding process, an encoding means for performing the encoding process for picture data, and a controlling means for skipping the predetermined process performed by the picture data process means corresponding to the determined result of the determining means and causing the encoding means to perform the encoding process.

An eighth aspect of the present invention is a picture encoding method, comprising the steps of (a) detecting a moving vector of a predetermined pixel block of input picture data and generating motion residual information, (b) comparing the motion residual information with a predetermined value and generating a determined result, (c) performing a predetermined process for picture data, the predetermined process being required for an encoding process, and (d) skipping the predetermined process corresponding to the determined result and performing the encoding process for the picture data.

A ninth aspect of the present invention is a moving vector calculating method, comprising the steps of (a) extracting a block from a reference picture corresponding to a block of a current picture to be processed, the size of the block of the reference picture being the same as the size of the block of the current picture, the origin of the block of the reference picture matching the origin of the block of the current picture, (b) while moving the block of the reference picture in a predetermined search area, obtaining a residual between the block of the current picture and the block of the reference picture, (c) detecting a block with the minimum residual from the reference picture so as to calculate a moving vector, (d) extracting N pixels of the curent picture and N pixels of the reference picture at a time (where N is an integer), (e) storing the N pixels of the current picture and the N pixels of the reference picture as successive data to a memory, and (f) reading pixels of the block of the current picture and pixels of the block of the reference picture as successive data from the memory so as to obtain a residual.

A tenth aspect of the present invention is a record medium on which a moving vector calculating program has been recorded, the moving vector calculating program causing a system that has the record medium to perform the steps of (a) extracting a block from a reference picture corresponding to a block of a current picture to be processed, the size of the block of the reference picture being the same as the size of the block of the current picture, the origin of the block of the reference picture matching the origin of the block of the current picture, (b) while moving the block of the reference picture in a predetermined search area, obtaining a residual between the block of the current picture and the block of the reference picture, (c) detecting a block with the minimum residual from the reference picture so as to calculate a moving vector, (d) extracting N pixels of the curent picture and N pixels of the reference picture at a time (where N is an integer), (e) storing the N pixels of the current picture and the N pixels of the reference picture as successive data to a memory, and (f) reading pixels of the block of the current picture and pixels of the block of the reference picture as successive data from the memory so as to obtain a residual.

An eleventh aspect of the present invention is a moving vector calculating method, comprising the steps of (a) extracting a block from a reference picture corresponding to a block of a current picture to be processed, the size of the block of the reference picture being the same as the size of the block of the current picture, the origin of the block of the reference picture matching the origin of the block of the current picture, (b) while moving the block of the reference picture in a predetermined search area, obtaining a residual between the block of the current picture and the block of the reference picture, (c) detecting a block with the minimum residual from the reference picture so as to calculate a coarse moving vector, (d) while moving the block of the reference picture in the vicinity of the coarse moving vector obtained at step (c), obtaining a residual between the block of the current picture and the block of the reference picture, (e) detecting a block with the minimum residual from the reference picture so as to detect a fine moving vector, (f) storing pixels of the current picture and pixels of the reference picture to a first memory, (g) extracting N pixels of the current picture and N pixels of the reference picture at a time (where N is an integer), and (h) storing the N pixels of the current picture and the N pixels of the reference picture as successive data to a second memory, wherein step (c) is performed with the N pixels of the current picture and the N pixels of the reference picture stored as successive data in the second memory, and wherein step (e) is performed with the pixels of the current picture and the pixels of the reference picture stored in the first memory.

A twelfth aspect of the present invention is a record medium on which a moving vector calculating program has been recorded, the moving vector calculating program causing a system that has the record medium to perform the steps of (a) extracting a block from a reference picture corresponding to a block of a current picture to be processed, the size of the block of the reference picture being the same as the size of the block of the current picture, the origin of the block of the reference picture matching the origin of the block of the current picture, (b) while moving the block of the reference picture in a predetermined search area, obtaining a residual between the block of the current picture and the block of the reference picture, (c) detecting a block with the minimum residual from the reference picture so as to calculate a coarse moving vector, (d) while moving the block of the reference picture in the vicinity of the coarse moving vector obtained at step (c), obtaining a residual between the block of the current picture and the block of the reference picture, (e) detecting a block with the minimum residual from the reference picture so as to detect a fine moving vector, (f) storing pixels of the current picture and pixels of the reference picture to a first memory, (g) extracting N pixels of the current picture and N pixels of the reference picture at a time (where N is an integer), and (h) storing the N pixels of the current picture and the N pixels of the reference picture as successive data to a second memory, wherein step (c) is performed with the N pixels of the current picture and the N pixels of the reference picture stored as successive data in the second memory, and wherein step (e) is performed with the pixels of the current picture and the pixels of the reference picture stored in the first memory.

A thirteenth aspect of the present invention is a moving vector calculating method, comprising the steps of (a) extracting a block from a reference picture corresponding to a block of a current picture to be processed, the size of the block of the reference picture being the same as the size of the block of the current picture, the origin of the block of the reference picture matching the origin of the block of the current picture, (b) while moving the block of the reference picture in a predetermined search area, obtaining a residual between the block of the current picture and the block of the reference picture, (c) detecting a block with the minimum residual from the reference picture so as to calculate a moving vector, and (d) comparing contour pixels of the block of the reference picture with contour pixels of the block of the current picture so as to obtain a residual therebetween.

A fourteenth aspect of the present invention is a record medium on which a moving vector calculating program has been recorded, the moving vector calculating program causing a system that has the record medium to perform the steps of (a) extracting a block from a reference picture corresponding to a block of a current picture to be processed, the size of the block of the reference picture being the same as the size of the block of the current picture, the origin of the block of the reference picture matching the origin of the block of the current picture, (b) while moving the block of the reference picture in a predetermined search area, obtaining a residual between the block of the current picture and the block of the reference picture, (c) detecting a block with the minimum residual from the reference picture so as to calculate a moving vector, and (d) comparing contour pixels of the block of the reference picture with contour pixels of the block of the current picture so as to obtain a residual therebetween.

These and other objects, features and advantages of the present invention will become more apparent in light of the following detailed description of a best mode embodiment thereof, as illustrated in the accompanying drawings.

BRIEF DESCRIPTION OF THE DRAWINGS

Fig. 1 is a block diagram showing the structure of a conventional MPEG2 encoder;
Fig. 2 is a schematic diagram for explaining a block matching process;
Fig. 3 is a schematic diagram showing the structure of a conventional moving picture encoding apparatus;
Fig. 4 is a block diagram showing an example of the structure of a data processing apparatus according to the present invention;
Fig. 5 is a flow chart for explaining an MPEG2 encoding process;
Fig. 6 is a schematic diagram for explaining a process of a block of the current frame in a moving vector calculating process according to the present invention;

Fig. 7 is a schematic diagram for explaining a process of a block of the current frame in the moving vector calculating process according to the present invention;

Fig. 8 is a schematic diagram for explaining a process of a block of the current frame in the moving vector calculating process according to the present invention;

Fig. 9 is a schematic diagram for explaining a zigzag scan process;

Fig. 10 is a schematic diagram for explaining a process of a block of a reference frame in the moving vector calculating process according to the present invention;

Fig. 11 is a schematic diagram for explaining a process of a block of a reference frame in the moving vector calculating process according to the present invention;

Fig. 12 is a schematic diagram for explaining a process of a block of a reference frame in the moving vector calculating process according to the present invention;

Fig. 13 is a graph showing a function for determining whether an intra-frame encoding process or an inter-frame encoding process is performed;

Fig. 14 is a graph showing a function for determining whether an intra-frame encoding process or an inter-frame encoding process is performed;

Fig. 15 is a flow chart for explaining a moving vector calculating process according to the present invention;

Fig. 16 is a flow chart for explaining a moving vector calculating process according to the present invention;

Fig. 17 is a schematic diagram for explaining a checkerwise thin-out process;

Figs. 18A, 18B, and 18C are schematic diagrams for explaining an arrangement of checkerwise data as successive data;

Figs. 19A and 19B are schematic diagrams for explaining an encoding process of an MPEG2 encoder according to the present invention;

Fig. 20 a schematic diagram for explaining a memory structure used in an encoding process of the MPEG2 encoder according to the present invention;

Fig. 21 is a timing chart for explaining an encoding process of the MPEG2 encoder according to the present invention;

Fig. 22 is a flow chart for explaining a moving vector calculating process of the MPEG2 encoder according to the present invention;

Fig. 23 is a flow chart for explaining a moving vector calculating process of the MPEG2 encoder according to the present invention;

Fig. 24 is a flow chart for explaining a moving vector calculating process of the MPEG2 encoder according to the present invention;

Fig. 25 is a schematic diagram for explaining an embodiment of the present invention;

Fig. 26 is a flow chart for explaining an embodiment of the present invention;

Fig. 27 is a block diagram showing an example of the structure of a picture encoding apparatus according to the present invention;

Fig. 28 is a schematic diagram for explaining a macro block extracting process used in a global vector detecting portion of the picture encoding apparatus;

Fig. 29 is a schematic diagram for explaining a process for dividing one picture into a plurality of areas and obtaining global vectors, the process being performed by the global vector detecting portion of the picture encoding apparatus;

Fig. 30 is a flow chart for explaining a motion detecting process of the picture encoding apparatus;

Fig. 31 is a block diagram showing the structure of a picture encoding apparatus according to the present invention; and

Fig. 32 is a flow chart for explaining an encoding process of the picture encoding apparatus according to the present invention.

DETAILED DESCRIPTION OF THE PREFERRED EMBODIMENTS

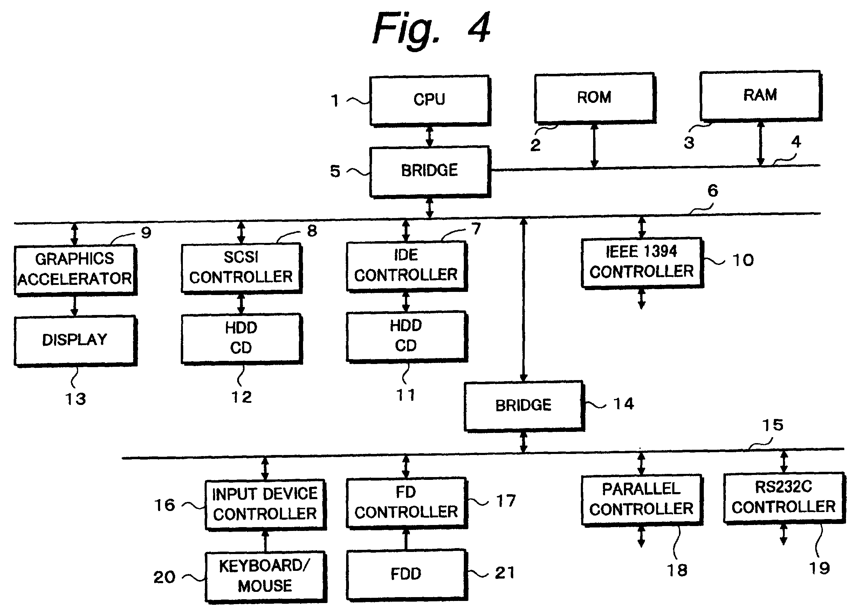

Next, with reference to the accompanying drawings, embodiments of the present invention will be described. Fig. 4 is a block diagram showing an example of the structure of a data processing apparatus according to a first embodiment of the present invention.

Referring to Fig. 4, reference numeral 1 is a CPU (Central Processing Unit). Reference numeral 2 is a ROM (Read Only Memory). Reference numeral 3 is a RAM (Random Access Memory). The CPU 1, the ROM 2, and the RAM 3 are connected to a processor bus 4.

The CPU 1 is for example a processor having MMX function. The MMX function allows a moving picture reproducing process, a picture editing process, and a sound synthesizing process, and so forth to be performed at high speed. With an MMX instruction that employs SIMD (Single Instruction Multiple Data) technology, the same process can be performed for successive data at a time.

The ROM 2 stores a boot strap program. The RAM 3 is a main memory as a working area. The recommended storage capacity of the RAM 3 is for example 64 MB or more.

The CPU 1 is connected to a bridge circuit 5. The bridge circuit 5 is connected to the processor bus 4. The bridge circuit 5 is connected to a PCI (Peripheral Component Interconnect) bus 6. The bridge circuit 5 connects the CPU 1, the processor bus 4, and the PCI bus 6.

The PCI bus 6 is connected to an IDE (Integrated Device Electronics) controller 7, a SCSI (Small Computer System Interface) controller 8, a graphics accelerator 9, and an IEEE (Institute Of Electrical and Electronics Engineers) 1394 controller 10.

The IDE controller 7 is connected to a storage device 11 such as a hard disk drive or a CD drive. The SCSI controller 8 is connected to a storage device 12 such as a hard disk drive or a CD drive. The SCSI controller 8 is also connected to a peripheral unit such as an image scanner as well as a storage device. The graphics accelerator 9 is connected to a display 13. The IEEE 1394 controller 10 is connected to a digital audio video unit such as a digital VCR (Video Cassette Recorder).

The PCI bus 6 is connected to an ISA (Industrial Standard Architecture) bus 15 through a bridge circuit 14. The bridge circuit 14 connects the PCI bus 6 and the ISA bus 15. The ISA bus 15 is connected to an input device controller 16, a floppy disk controller 17, a parallel controller 18, and an RS232C controller 19.

The input device controller 18 is connected to an input device 20 such as a keyboard or a mouse. The floppy disk controller 17 is connected to a floppy disk drive 21. A printer or the like can be connected to the parallel controller 18. Modem or the like can be connected to the RS232C controller 19.

In the initial state, the boot strap program stored in the ROM 2 gets started so as to perform initial settings. Thereafter, the storage device 11 or 12 is accessed. An operating system stored in the storage device 11 or 12 is read. The operating system resides in the RAM 3 as a main memory. Thus, the operating system gets started. Under the control of the operating system, various processes are executed.

In the example, the PCI bus and the ISA bus are used. However, according to the present invention, USB (Universal Serial Bus) can be used. A keyboard, a mouse, or the like can be connected to the USB.

When the data processing apparatus shown in Fig. 4 performs the MPEG2 encoding process, an application program for performing the MPEG2 encoding process is executed. The application program is stored as an executable program in the storage device 11 such as an IDE hard disk or the storage device 12 such as a SCSI hard disk. When the application program is executed, it is read to the RAM 3 and sequentially executed by the CPU 1.

The application program for performing the MPEG2 encoding process may be pre-installed to the storage device 11 such as an IDE hard disk or the storage device 12 such as a SCSI hard disk. Alternatively, a CD-ROM or a floppy disk may be provided with the application program for performing the MPEG2 encoding process in an executable format or a compressed format. The user may install the program stored in the CD-ROM or the floppy disk to the storage device 11 such as an IDE hard disk or the storage deice 12 such as a SCSI hard disk. As another alternative method, the application program may be downloaded through a communication line.

When the application program for performing the MPEG2 encoding process is executed, a moving vector calculating process, a DCT calculating process, a quantizing process, and a variable length code encoding process are performed for digital video data corresponding to a prediction mode. The digital video data is compressed corresponding to the MPEG2 method. At this point, as a working area, the RAM 3 is used. Calculating operations for such processes are performed by calculating functions of the CPU 1. The digital video data is input from an external digital VCR or the like connected to the IEEE 1394 controller 10. Output data is recorded to a hard disk drive or the like connected to the SCSI controller 8 or the IDE controller 7.

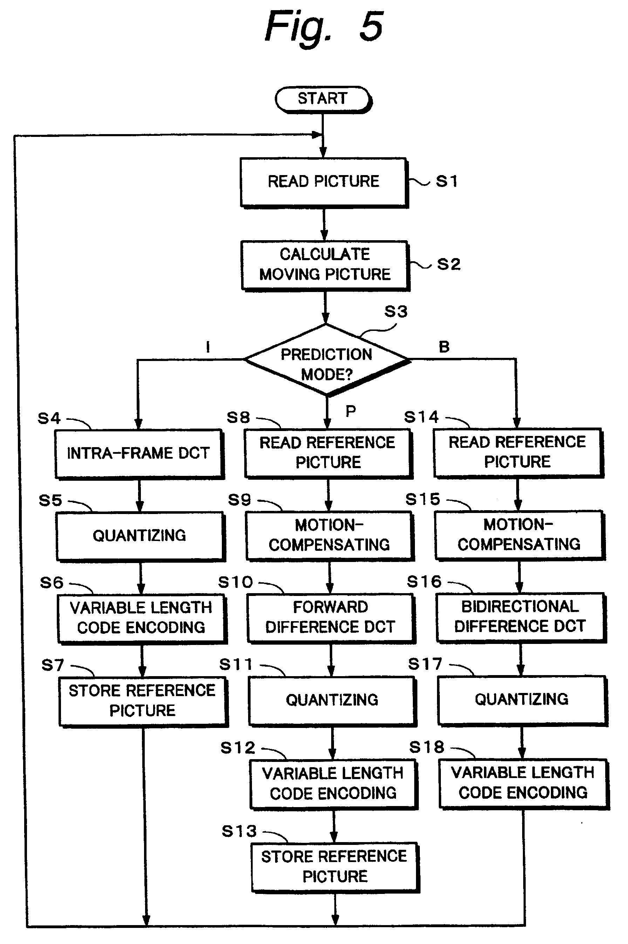

Fig. 5 is a flow chart showing the MPEG2 encoding process of the program.

As shown in Fig. 5, digital video data of a plurality of frames is input. The digital video data is buffered to the RAM 3 (at step S1). By a block matching process, a moving vector is calculated (at step S2). In the block matching process, contour pixels of blocks may be used.

It is determined whether or not the prediction mode is an I picture, a P picture, or a B picture (at step S3). When the prediction mode is an I picture as the determined result at step S3, the DCT process for each block of (8 x 8) pixels of the same frame is performed (at step S4). The obtained coefficient data is quantized (at step S5) and then encoded with variable length code (at step S6). The resultant data is stored as data of a reference picture to the RAM 3 (at step S7).

When the prediction mode is a P picture as the determined result at step S3, data of a forward reference picture is read from the RAM 3 (at step S8). The reference picture is motion-compensated corresponding to the moving vector calculated at step S2 (at step S9). Thus, the difference between the data of the current picture and the data of the reference picture that has been motion-compensated is obtained. The DCT process is performed for the difference between the data of the current picture and the data of the reference picture (at step S10). The obtained data is quantized (at step S11) and the encoded with variable length code (at step S12). The resultant data is stored as data of the reference picture to the RAM 3 (at step S13).

When the prediction mode is a B picture as the determined result at step S3, data of bidirectional reference pictures is read from the RAM 3 (at step S14). The reference picture is motion-compensated corresponding to the moving vector calculated at step S2 (at step S15). The difference between the data of the current picture and the data of the reference pictures that have been motion-compensated is obtained. The DCT process is performed for the difference between the data of the current picture and the data of the reference pictures (at step S16). The obtained data is quantized (at step S17) and encoded with variable length code (at step S18).

The moving vector calculated at step S2 shown in Fig. 5 is performed in the following manner. A block with the same size and the same origin as a block divided from the current frame to be processed is extracted from a reference frame. While the block of the reference frame is being moved in a predetermined search area, the sum of absolute values of difference values between pixels of the block of the reference frame and pixels of the relevant block of the current frame is obtained as a residual. A block of the reference frame with the minimum residual is obtained. The block matching process requires many calculating steps.

Thus, according to the present invention, the block matching process is performed by orthogonally transforming data of blocks and comparing the blocks. As an example of the orthogonally transforming process, Hadamard transforming method is used.

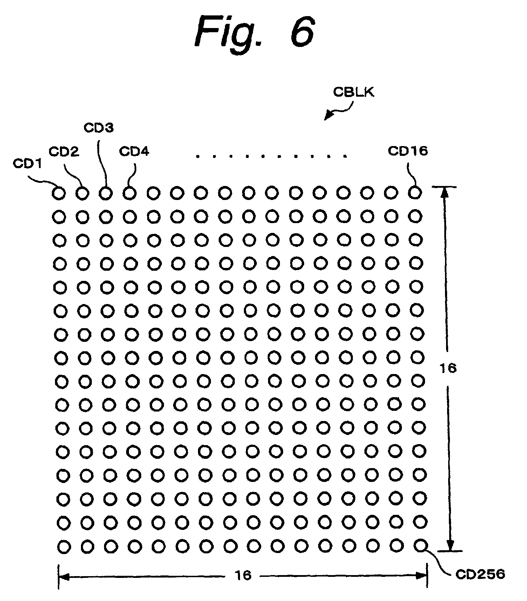

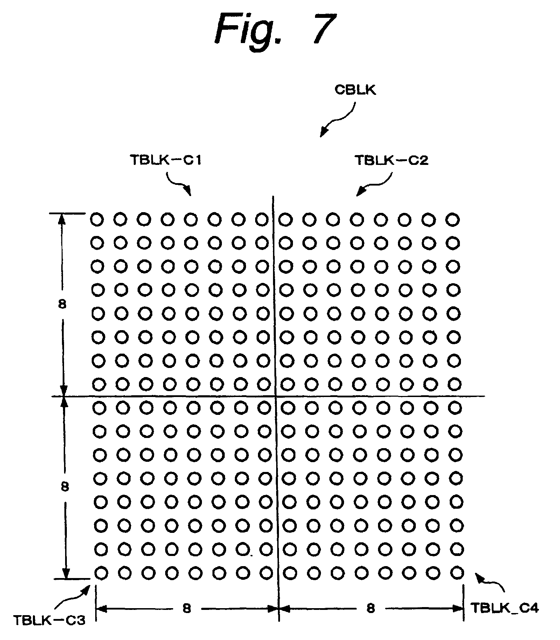

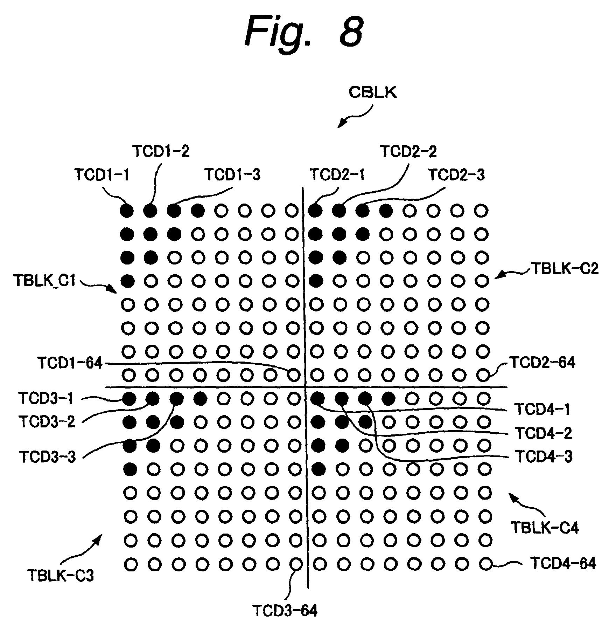

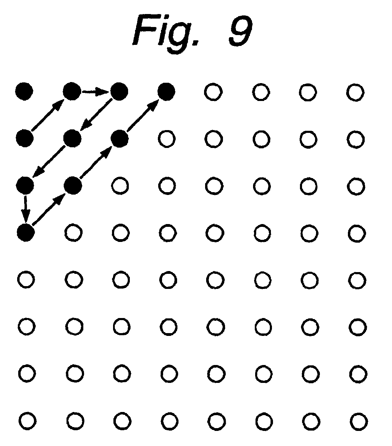

In other words, as shown in Fig. 6, data pieces CD1, CD2, ..., and CD256 of a block CBLK of (16 x 16) pixels of the current frame are obtained. As shown in Fig. 7, the block CBLK of (16 x 16) pixels of the current frame is divided into four blocks TBLK_C1 to TBLK_C4 each of which is composed of (8 x 8) pixels. As shown in Fig. 8, the four blocks TBLK_C1 to TBLK_C4 are orthogonally transformed into spectrum data pieces TCD1-1 to TCD1-64, TCD2-1 to TCD2-64, TCD3-1 to TCD3-64, and TCD4-1 to TCD4-64. Data pieces of the four blocks TBLK_C1 to TBLK_C4 are obtained in the order of lower spatial frequency data pieces by zigzag scanning method as shown in Fig. 9.

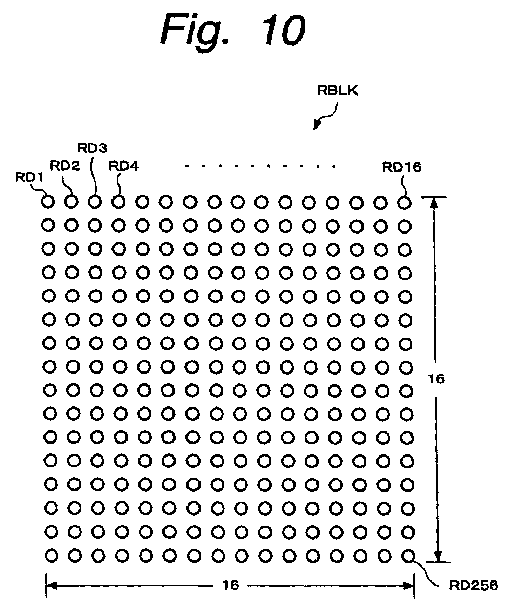

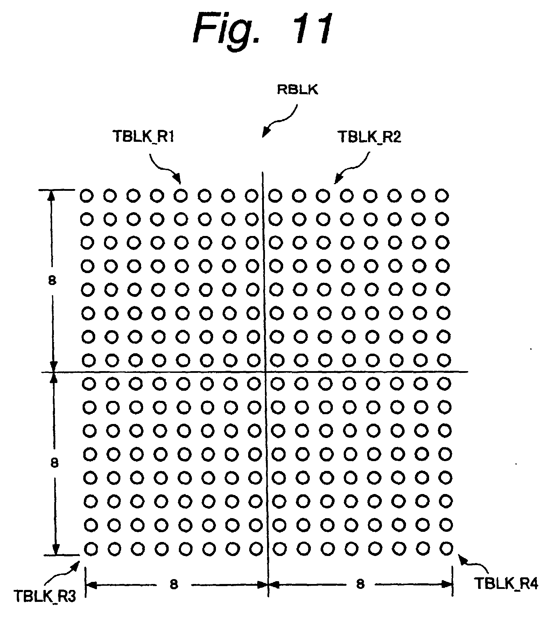

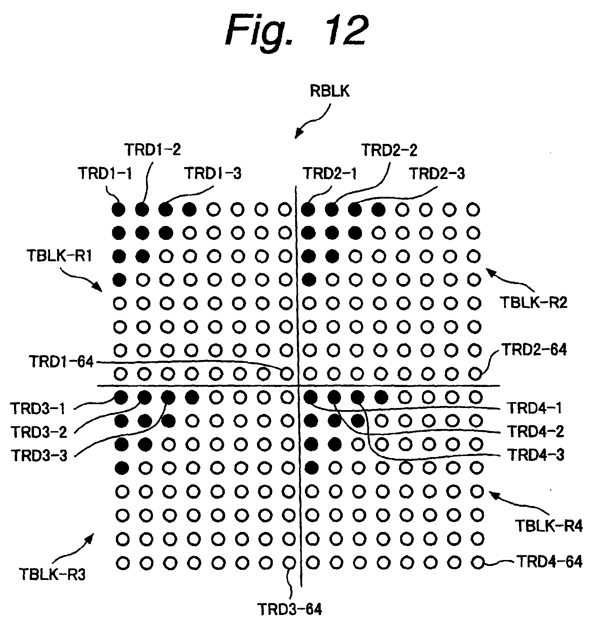

Likewise, as shown in Fig. 10, data pieces RD1, RD2, ..., and RD256 of a block RBLK of (16 x 16) pixels of a reference frame are obtained. As shown in Fig. 11, the block RBLK of the reference frame is divided into four blocks TBLK_R1 to TBLKR4. As shown in Fig. 12, the four blocks TBLK_R1 to TBLK_R4 are orthogonally transformed into spectrum data pieces TRD1-1 to TRD1-64, TRD2-1 to TRD2-64, TRD3-1 to TRD3-64, and TRD4-1 to TRD4-64. Data pieces of the four blocks TBLK_R1 to TBLK_R4 are obtained in the order of lower spatial frequency data pieces by zigzag scanning method as shown in Fig. 9.

When a video signal is orthogonally transformed, energy concentrates on low frequency data. Thus, high frequency data does not almost exist. Consequently, when data pieces of the four blocks TBLK_C1 to TBLK_C4 are obtained by the zigzag scanning method, the number of data pieces is limited to a predetermined value. In this example, the number of data pieces obtained is limited to 10. However, according to the present invention, the number of data pieces obtained may be a value other than 10. Likewise, when data pieces of the four blocks TBLK_R1 to TBLK_R4 of the reference frame are obtained by the zigzag scanning method, the number of data pieces obtained is limited to a predetermined value. In this example, the number of data pieces obtained is limited to 10.

In other words, for example, 10 data pieces (denoted by black dots shown in Fig. 8) are obtained from the four blocks TBLK_C1 to TBLK_4 of the current frame. Likewise, for example, 10 data pieces (denoted by black dots shown in Fig. 12) are obtained from the four blocks TBLK_R1 to TBLK_R4 of the reference frame. The sum of the absolute values of the difference values between the data pieces obtained from the four blocks TBLK_C1 to TBLK_C4 of the current frame and the data pieces obtained from the fourth blocks TBLK_R1 to TBLK_R4 of the reference frame is obtained as a residual.

In the block matching process, since data of one block is orthogonally transformed and the number of data pieces is limited to a predetermined value, the number of calculating steps can be remarkably decreased. Thus, the calculating speed is improved.

In other words, as described above, one block is divided into four blocks. The four blocks are orthogonally transformed (by for example Hadamard transforming method). The number of data pieces of each orthogonally transformed block is limited to 10. In this condition, the block matching process is performed. In this case, since the number of data pieces is limited to 10 and one block is divided into four blocks, the number of calculating steps for obtaining the residual in the block matching process is 40. In contrast, when the block matching process is performed with a block composed of (16 x 16) pixels, the number of calculating steps becomes (16 x 16 = 256). Thus, when a residual is obtained with one block that is orthogonally transformed, the number of calculating steps can be remarkably decreased.

In this case, the orthogonally transforming method such as Hadamard transforming method should be used. However, the Hadamard transforming method can be performed with simple arithmetic operations such as additions and subtractions. Thus, the number of calculating steps does not largely increase.

In the MPEG2 encoding process, a picture of the current frame is used as a picture of the next reference frame. Thus, when orthogonally transformed data of a block of a picture of the current frame is stored, it can be used as data of a reference frame.

When a moving vector is searched, search areas overlap. In an overlapped area, the same orthogonally transformed data is required. Thus, for a block of a reference frame, orthogonally transformed data that has been moved pixel by pixel is stored. In this case, when search areas overlap, the stored data can be used.

In the above-described example, as the orthogonally transforming method, the Hadamard transforming method was used. However, according to the present invention, for example, DCT transforming method or FFT (Fast Fourier Transform) can be used.

In the above-described example, a block of (16 x 16) pixels is divided into four blocks each of which is composed of (8 x 8) pixels. The four divided blocks are orthogonally transformed. Alternatively, a block of (16 x 16) pixels may be directly orthogonally transformed. However, when one block is divided into four blocks and the four blocks are orthogonally transformed, the transforming algorithm becomes simple. In addition, a general-purpose orthogonally transforming circuit and algorithm can be used.

Next, a second embodiment of the present invention will be described. According to the second embodiment, in the middle of the block matching calculating loop, the sum of the absolute values of the difference values between pixels of a block of the current frame and pixels of the relevant block of a reference frame is compared with a predetermined threshold value. When the sum is equal to or larger than the predetermined threshold value, the process is terminated. Thus, the number of calculating steps can be decreased. Consequently, a moving vector can be detected at high speed.

The threshold value is assigned corresponding to the sum of mean discrete absolute values (MAD) and a residual AD (0, 0) at the origin. Thus, since the threshold value is dynamically assigned, the process can be effectively performed.

In the case of a P picture and a B picture, the intra-frame encoding process may be performed for each macro block (in Fig. 5, for simplicity, in the case of a P picture and a B picture, the inter-frame encoding process is performed with a reference frame). In other words, the inter-frame encoding process can compress a picture more effectively than the intra-frame encoding process. However, in the case of a picture that contains many DC components or a picture that largely moves (namely, the sum of the absolute values of the difference values between pixels of a block of the current frame and pixels of the relevant block of a reference frame is large), the intra-frame encoding process can compress the picture more effectively than the inter-frame encoding process. When the intra-frame encoding process is performed, since the moving vector calculating process is not required, inaccuracy of the moving vector is permissible.

When the sum of the absolute values of the difference values between pixels of a block of the current block and pixels of the relevant block of a reference block is equal to or larger than the predetermined threshold value, the process is terminated. Thus, if a large value is assigned to the threshold value, the probability of which the process is terminated in the middle becomes high. In contrast, when a small value is assigned to the threshold value, the probability of which a moving vector is inaccurately detected becomes high. However, when the intra-frame encoding process is performed, since the moving vector calculating process is not required, inaccuracy of the moving vector is permissible. Thus, when a residual obtained in the intra-frame encoding process is used as the threshold value, the efficiency of the process is improved.

When a P picture and a B picture are encoded, the intra-frame encoding process is performed corresponding to the value of the MAD and the residual AD (x, y) of the detected moving vector.

The MAD is the sum of the absolute values of the difference values between the values of pixels of one frame and the mean value thereof. The MAD is obtained as follows.

$$MAD = \sum_{x=1}^{16} \sum_{y=1}^{16} |Pixel(x,y) - AVE\_BLOCK|$$

$$AVE\_BLOCK = \frac{\sum_{x=1}^{16} \sum_{y=1}^{16} Pixel(x,y)}{256}$$

The MAD represents the complication of a pattern of one block of a picture. Thus, when a pattern is simple, the value of the MAD is small. In contrast, when a pattern is complicated, the value of the MAD is large.

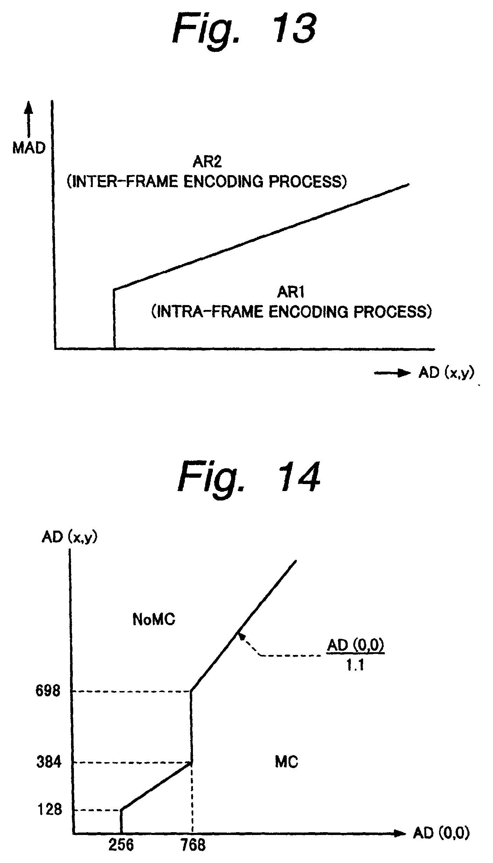

Thus, with a function shown in Fig. 13, it is determined whether the intra-frame encoding process or the inter-frame encoding process is performed. In Fig. 13, the horizontal axis represents the value of the residual AD (x, y) at the position of a moving vector, whereas the vertical axis represents the value of the MAD. In Fig. 13, when both the value of the MAD and the value of the residual (x, y) at the position of a moving vector are in an area AR1, the intra-frame encoding process is performed. When they are in an area AR2, the inter-frame encoding process is performed. When the value of the MAD is small, since the pattern of the current block is simple, this function represents that the intra-frame encoding process is performed. When the value of the residual AD (x, y) at the position of the moving vector is small, this function represents that the inter-frame encoding process is performed instead of the intra-frame encoding process.

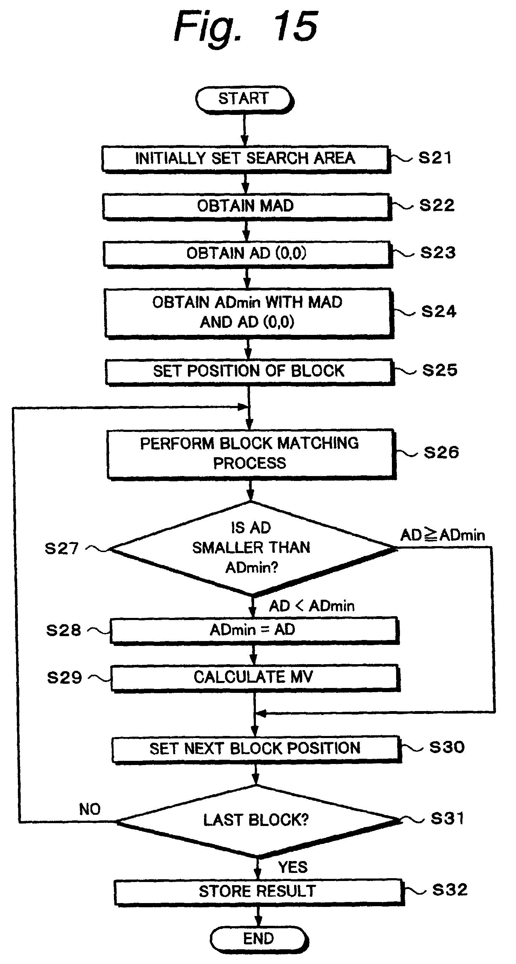

In the middle of the block matching process, the sum of the absolute values of the difference values between pixels of a block of the current frame and pixels of the relevant block of a reference frame is compared with a predetermined threshold value, when the sum is equal to or larger than the threshold value, the process is terminated. In addition, corresponding to functions shown in Figs. 13 and 14 with the value of the MAD and the value of the residual AD (0, 0) at the origin, it is determined whether the intra-frame encoding process or the inter-frame encoding process is performed. In addition, it is determined whether or not the motion compensation is performed. As the determined results, the initial value of the threshold value is assigned. Thus, a moving vector can be effectively calculated. Fig. 15 shows a flow chart showing such a process.

Since the threshold value that is initially assigned in the block matching process is not always small, when a moving vector is detected at first, the threshold value is obtained with the value of the MAD and the value of the residual AD (0, 0) at the origin. In the next block matching process for the same block, the original threshold value or the obtained sum whichever smaller is used. Thus, the process can be effectively performed.

In Fig. 15, the search area of a block of a reference frame is initially set (at step S21). Thereafter, the values of the MAD is obtained (at step S22). The value of the residual AD (0, 0) at the origin is obtained (at step S23). Corresponding to the value of the MAD and the value of the residual AD (0, 0) at the origin, the initial value of the ADmin is set (at step S24).

The value of the ADmin represents the minimum value of the residual that has been obtained. The initial value of the ADmin becomes the initial value of the threshold value of the sum of the absolute values of the difference values between pixels of a block of the current frame and pixels of the relevant block of a reference frame. The value of the ADmin is dynamically set depending on whether the intra-frame encoding process or the inter-frame encoding process is performed and whether or not the motion compensating process is performed corresponding to the functions shown in Figs. 13 and 14.

After the initial value of the ADmin has been set at step S24, the upper right position of the search area is selected for the first block matching process (at step S25). For a block at the initial position, the block matching process is performed (at step S26).

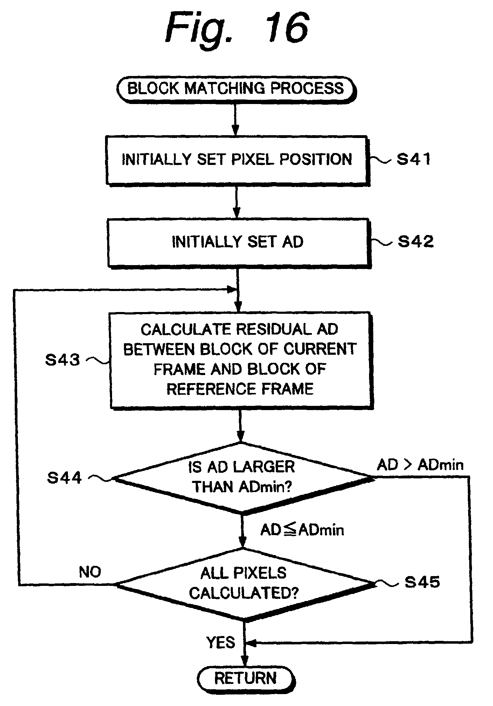

In the middle of the block matching process, the sum of the absolute values of the difference values between pixels of a block of the current frame and pixels of the relevant block of a reference frame is compared with a predetermined threshold value. When the sum is equal to or larger than the predetermined threshold value, the process is terminated. When the block matching process is initially performed, as the threshold value, the initial value of the ADmin obtained at step S24 is used. Fig. 16 is a flow chart showing the block matching process.

Referring to Fig. 16, in the block matching process (at step S26), a pixel position is initially set (at step S41). The value of the residual AD is initially set (at step S42). A residual is obtained with the sum of the absolute values of the difference values between pixels of a reference frame and pixels of a current frame (at step S43). In the middle of the block matching process, it is determined whether or not the sum of the absolute values of the difference values between pixels of the reference frame and pixels of the current frame exceeds the value of the ADmin (at step S44). When the determined result at step S44 is Yes (namely, the sum exceeds the value of the ADmin), the block matching process is terminated. The flow returns to the main routine. When the determined result at step S44 is No (namely, the sum does not exceed the value of the ADmin), it is determined whether or not the block matching process has been performed for all the pixels (at step S45). When the determined result at step S45 is No (namely, the block matching process has not been performed for all the pixels), the flow returns to step S43. At step S43, the sum of the absolute values of the difference values between pixels of the reference frame and pixels of the current frame is continued. When the determined result at step S45 is Yes (namely, the block matching process has been performed for all the pixels), the block matching process is terminated. Thereafter, the flow returns to the main routine.

As described above, in the block matching process, it is determined whether or not the value of the AD exceeds the value of the ADmin at step S44. When the determined result at step S44 is Yes (namely, the value of the AD exceeds the value of the ADmin), the flow returns to the main routine. Thus, the value of the ADmin becomes the threshold value. In the middle of the block matching process, the sum of the absolute values of the difference values between pixels of a block of the current frame and pixels of the relevant block of the reference frame is compared with the threshold value. When the sum exceeds the predetermined threshold value, the block matching process is terminated. Thus, the number of calculating steps is decreased. Consequently, a moving vector can be detected at high speed.

In addition, the value of the ADmin used as the initial value of the threshold value is set corresponding to the value of the MAD and the value of the residual AD (0, 0) at the origin. When a residual represents that the intra-frame encoding process is performed, since a moving vector is not required, inaccuracy of the moving vector is permissible. Since the threshold value is dynamically varied, when a residual exceeds a value at which a moving vector is not required, the probability of which the block matching process is terminated becomes high. Thus, the number of calculating steps is further decreased.

In Fig. 15, the value of the AD obtained in the block matching process is compared with the minimum value Amin that has been obtained (at step S27). When the determined result at step S27 is Yes (namely, the value of the AD is smaller than the minimum value ADmin), the current sum AD is used as the minimum value ADmin (at step S28). The value of the AD is recorded as the moving vector MV (at step S29). Thereafter, the next block is processed (at step S30). Thereafter, it is determined whether or not the last block has been processed (at step S31). When the determined result at step S31 is No (namely, the last block has not been processed), the flow returns to step S26. At step S26, the block matching process is performed for the next block.

As shown in Fig. 16, in the middle of the block matching process, the sum of the absolute values of the difference values between pixels of a block of the current frame and pixels of the relevant block of the reference frame is compared with a predetermined threshold value. When the sum is equal to or larger than the predetermined threshold value, the process is terminated. As the threshold value, the value of the ADmin is used.

At step S27, the value of the AD that has been obtained in the block matching process is compared with the value of the ADmin that has been obtained. When the determined result at step S27 is Yes (namely, the value of the AD is smaller than the current minimum value ADmin), the value of the AD becomes the value of the ADmin. Thus, when the value of the AD that has been obtained is larger than the value of the ADmin, the next threshold value is the same as the original threshold value. When the value of the AD is smaller than the value of the ADmin, the next threshold value becomes the minimum value of the AD. Thus, in the block matching process shown in Fig. 16, when a residual exceeds the value of the ADmin, the process is terminated.

Thereafter, a loop from step S26 to step S31 is repeated. The minimum value of the sum of the absolute values of the difference values between pixels of a block of the current frame and pixels of the relevant block of the reference frame is obtained. At step S31, it is determined whether or not the last block has been processed. When the determined result at step S31 is Yes (namely, the last block has been processed), the minimum value ADmin becomes the moving vector MV. The result is stored (at step S32).

In the above-described example, the initial value of the threshold value is assigned corresponding to the value of the MAD and the value of the residual AD (x, y) at the origin. However, according to the present invention, the threshold value may be assigned corresponding to one of the value of the MAD and the value of the residual AD (x, y) at the origin.

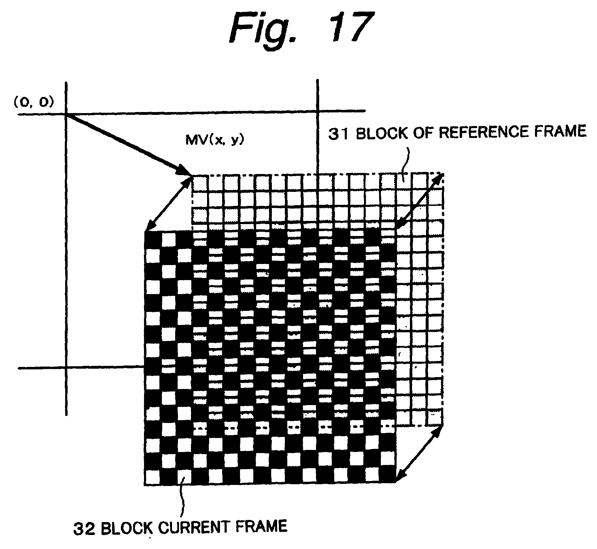

In a third embodiment of the present invention, as shown in Fig. 17, the block matching process is performed by checkerwise thinning out pixels of a block of a reference frame and pixels of a relevant block of the current frame.

Referring to Fig. 17, a block 31 of a reference frame is composed of (16 x 16) pixels. (8 x 16) pixels are obtained checkerwise from the block 31. Likewise, a block 32 of the current frame is composed of (16 x 16) pixels. (8 x 16) pixels are obtained checkerwise from the block 31.

At this point, the pixels of the current frame and the pixels of the reference frame that have been obtained checkerwise are stored as successive data to a memory (a predetermined area of the RAM 3) so that the block matching process can be performed effectively with an MMX instruction.

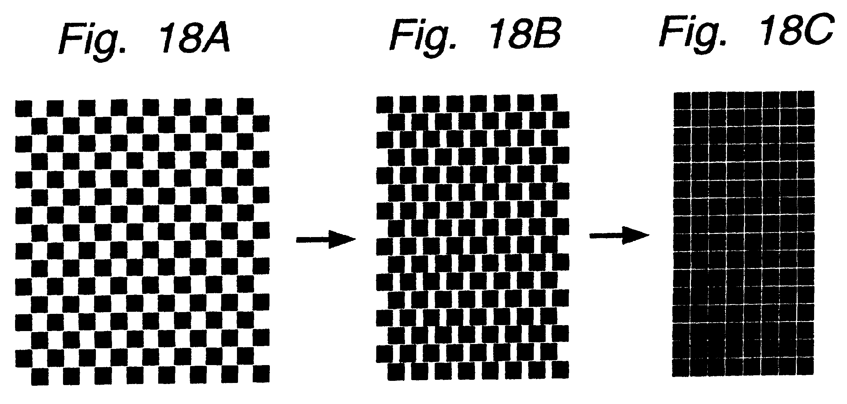

In other words, as shown in Fig. 18A, pixels of the current frame and pixels of the reference frame are obtained checkerwise. As shown in Fig. 18B, the pixels that have been thinned out checkerwise are rearranged as successive data. As shown in Fig. 18C, the pixels that have been thinned out checkerwise are stored to successive addresses of the memory.

When the pixels of the current frame and the pixels of the reference frame are stored as successive data to the memory, since the block matching process can be performed with an MMX instruction, the process can be performed at high speed.

When the pixels of the current frame and the pixels of the reference frame that have been thinned out checkerwise are stored as successive data to the memory, since two pixels are searched at a time, a logarithmically searching process can be easily performed as well as the availability of an MMX instruction.

In the logarithmically searching process, a point with the minimum residual is coarsely searched in a search area. Thereafter, a point with the minimum residual is finely searched around the coarsely searched point. As a result, a moving vector is detected.

When pixels of the current frame and pixels of the reference frame that have been obtained checkerwise are stored as successive data to the memory, the logarithmically searching process is performed in the following manner.

A first memory that stores all pixels of the current frame and all pixels of the reference frame and a second memory (or a memory area) that stores pixels of the current frame and pixels of the reference frame that have been obtained checkerwise as successive data are prepared. Using the second memory, a moving vector is searched coarsely at two pixel step. After a moving vector has been coarsely detected, using the first memory, a moving vector is finely searched in the vicinity of the obtained point pixel by pixel. Thus, a moving vector can be finally detected.

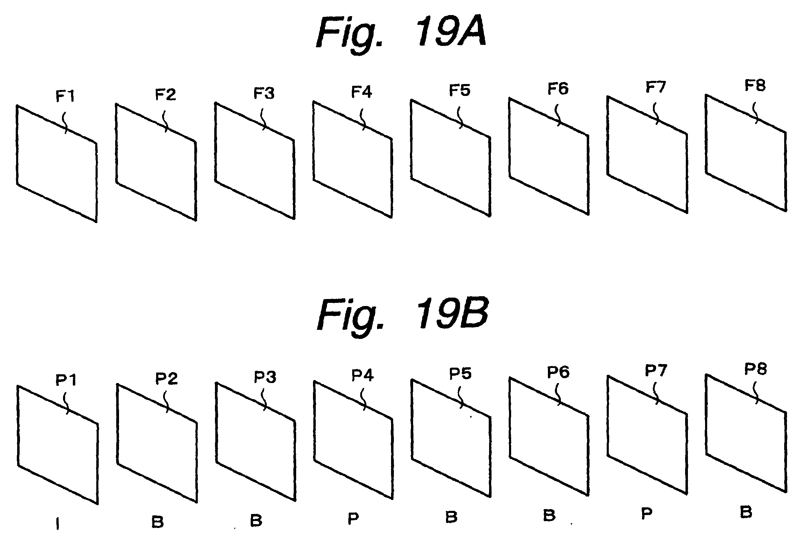

For example, as shown in Fig. 19A, picture data pieces F1, F2, F3, F4, F5, F6, F7, and so forth of each frame are input. The input picture data pieces F1, F2, F3, F4, F5, F6, F7, and so forth are encoded into MPEG2 picture data pieces P1, P2, P3, P4, P5, P6, P7, and so forth in the order of I, B, B, P, B, B, and P pictures.

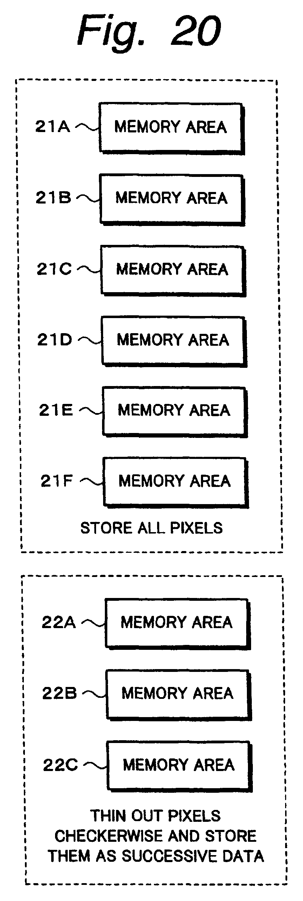

In such an encoding process, as shown in Fig. 20, to obtain a moving vector, the working area RAM 3 has memory areas 21A to 21F and memory areas 22A to 22C. The memory areas 21A to 21F store all pixels of one frame. The memory areas 22A to 22C store pixels of one frame that have been obtained checkerwise as successive data.

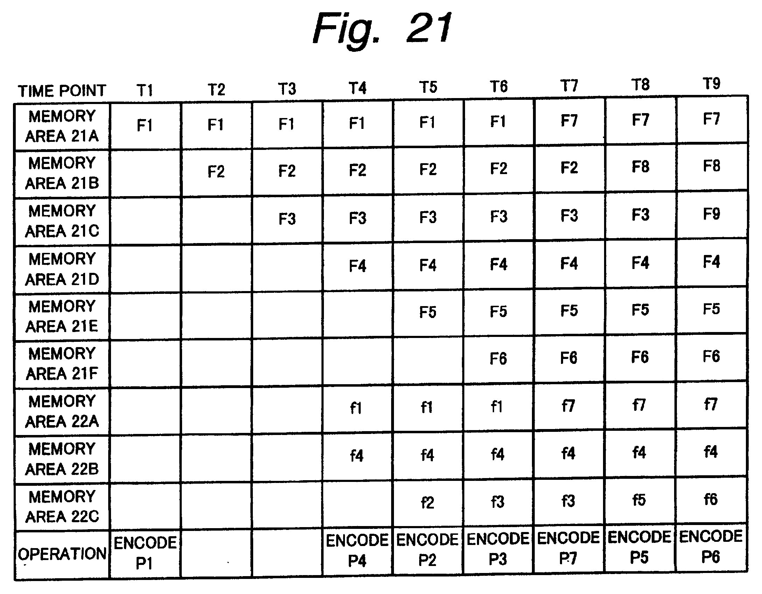

When the picture data pieces F1, F2, F3, and so forth are input as shown in Fig. 21, the picture data pieces of each frame are stored to the memory areas 21A to 21F. In addition, pixels are obtained checkerwise from the picture data pieces sample by sample. The resultant pixels are arranged to successive addresses and stored as picture data pieces f1, f2, f3, and so forth to the memory areas 22A to 22C.

In other words, at time point T1, the picture data piece F1 is stored to the memory area 21A. At time point T2, the picture data piece F2 is stored to the memory area 21B. At time point T3, the picture data piece F3 is stored to the memory area 21C. At time point T4, the picture data piece F4 is stored to the memory area 21D.

At time point T4, pixels are obtained from the picture data piece F1 checkerwise sample by sample. The picture data piece f1 arranged to successive addresses is stored to the memory area 22A. Pixels are obtained from the picture data piece F4 checkerwise sample by sample. The picture data piece f4 arranged to successive addresses is stored to the memory area 22B.

At time point T5, the picture data piece F5 is stored to the memory area 21E. Pixels are obtained from the picture data piece F2 checkerwise sample by sample. The picture data piece f2 arranged to successive addresses is stored to the memory area 22C.

At time point T6, the picture data piece F6 is stored to the memory area 21F. Pixels are obtained from the picture data piece F3 checkerwise sample by sample. The picture data piece f3 arranged to successive addresses is stored to the memory area 22C.

At time point T7, the picture data piece F7 is stored to the memory area 21A. Pixels are obtained from the picture data piece F7 checkerwise sample by sample. The picture data piece f7 arranged to successive addresses is stored to the memory area 22A.

As shown in Fig. 21, picture data pieces of each frame are stored to the memory areas 21A to 21F. In addition, pixels are obtained from picture data pieces checkerwise sample by sample. Picture data pieces arranged to successive addresses are stored to the memory areas 22A to 22C.

With the picture data pieces F1, F2, F3, and so forth stored in the memory areas 21A to 21F and the picture data pieces f1,f2, f3, and so forth stored in the memory areas 22A to 22C, a moving vector is obtained. A moving vector is searched in a predetermined search area at two pixel step. A moving vector is searched in the vicinity of the searched point pixel by pixel. In other words, a moving vector is obtained by the logarithmic searching process.

Since the picture data piece P1 is an I picture, it can be encoded from time point T1 to time point T3.

At time point T4, the picture data piece P4 that is a P picture is encoded. A moving vector of the picture data piece P4 is obtained. For the picture data piece P4, the picture data piece F1 is used as a reference frame and the picture data piece F4 is used as the current frame. In this case, in the course searching process (at two pixel step), as a block of a reference frame, the picture data piece f1 stored in the memory area 22A is used. As a block of the current frame, the picture data piece f4 stored in the memory area 22B is used. In the fine searching process (at one pixel step), as a block of the reference block, the picture data piece F1 stored in the memory area 21A is used. As a block of the current frame, the picture data piece F4 stored in the memory area 21D is used.

At time point T5, the picture data piece P2 that is a B picture is encoded. A moving vector of the picture data piece P2 is obtained. For the picture data piece P2, as reference frames, the picture data pieces F1 and F4 are used. As the current frame, the picture data piece F2 is used. In this case, in the coarse searching process (at two pixel step), as blocks of the reference frames, the picture data piece f1 stored in the memory area 22A and the picture data piece f4 stored in the memory area 22B are used. As a block of the current frame, the picture data piece f2 stored in the memory area 22C is used. In the fine searching process (at one pixel step), as blocks of the reference frames, the picture data piece F1 stored in the memory area 21A and the picture data piece F4 stored in the memory area 21D are used. As a block of the current frame, the picture data piece F2 stored in the memory area 21B is used.

At time point T6, the picture data piece P3 that is a B picture is encoded. A moving vector of the picture P3 is obtained. For the picture data piece P3, as reference frames, the picture data pieces F1 and F4 are used. As the current frame, the picture data piece F3 is used. In this case, in the coarse searching process (at two pixel step), as blocks of the reference frames, the picture data piece f1 stored in the memory area 22A and the picture data piece f4 stored in the memory area 22B are used. As a block of the current frame, the picture data piece f3 stored in the memory area 22C is used. In the fine searching process (at one pixel step), as blocks of the reference frames, the picture data piece F1 stored in the memory area 21A and the picture data piece F4 stored in the memory area 21D are used. As a block of the current block, the picture data piece F3 stored in the memory area 21C is used.

At time point T7, the picture data piece P7 that is a P picture is encoded. A moving vector of the picture P7 is obtained. For the picture data piece P7, as a reference frame, the picture data piece F4 is used. As the current frame, the picture data piece F7 is used. In this case, in the coarse searching process (at two pixel step), as a block of the reference frame, the picture data piece f4 stored in the memory area 22B is used. As a block of the current frame, the picture data piece f7 stored in the memory area 22A is used. In the fine searching process (at one pixel step), as a block of the reference frame, the picture data piece f4 stored in the memory area 21D is used. As a block of the current frame, the picture data piece F7 stored in the memory area 21A is used.

Next, likewise, at time point T8, a moving vector of the picture data piece P5 that is a B picture is obtained. At time point T9, a moving vector of the picture data piece P6 that is a B picture is obtained.

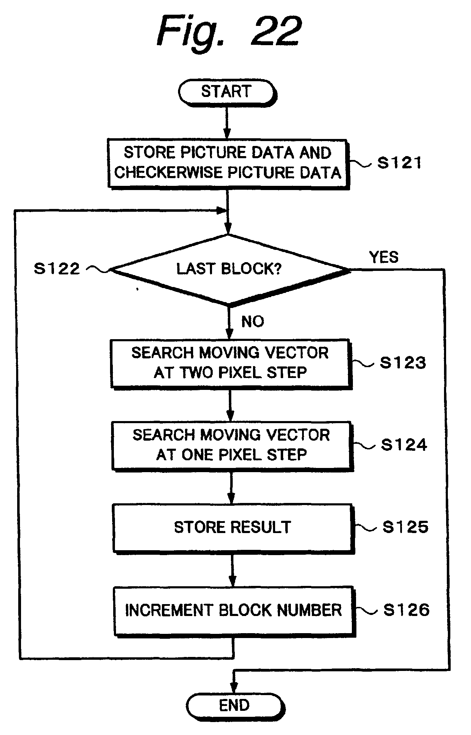

Fig. 22 is a flow chart showing a logarithmic searching process for calculating a moving vector. In Fig. 22, input picture data is stored. Pixels are extracted checkerwise from a reference frame and the current frame sample by sample. The pixels that have been thinned out checkerwise are arranged as successive data and stored (at step S121).

Thereafter, it is determined whether or not all blocks of the picture have been processed (at step S122).

When the determined result at step S122 is No (namely, all the blocks of the picture have not been processed), while the block is being moved in a predetermined search area at two pixel step, a moving vector is searched (at step S123).

After a moving vector has been detected, while the block is being moved in the vicinity of the detected moving vector pixel by pixel, a moving vector is searched (at step S124).

The detected result is stored (at step S125). Thereafter, the next block is processed (at step S126). Thereafter, the flow returns to step S122. When the determined result at step S122 is No (namely, all the blocks have not been processed), the similar process is repeated. Thus, the moving vector of the next block is obtained. After the moving vector of the last block of picture has been obtained, since the determined result at step S122 is Yes, the process is completed.

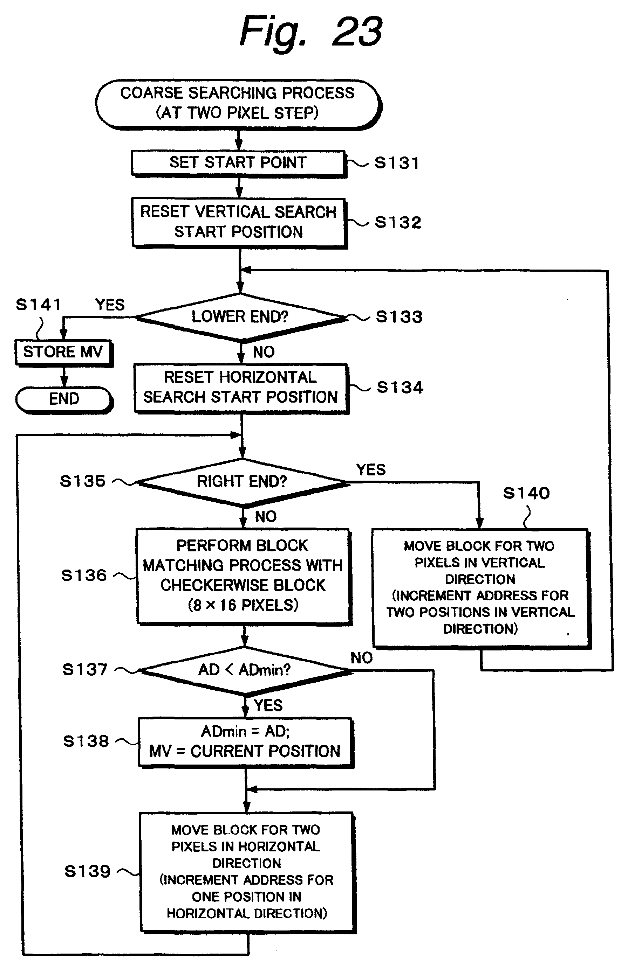

Fig. 23 is a flow chart showing the coarse searching process (at two pixel step) at step S123 shown in Fig. 22. In the coarse searching process (at two pixel step), pixels of the current frame and pixels of the reference frame are extracted checkerwise. The extracted pixels are stored as successive data to a memory.

In Fig. 23, the start point of the search area is set (at step S131). The vertical search start position is reset to the upper end (at step S132). In the vertical direction, it is determined whether or not the lower end has been detected (at step S133). When the determined result at step S133 is No (namely, the lower end has not been detected), the horizontal position is reset to the left end (at step S134).

Thereafter, it is determined whether or not the right end of the search area has been detected (at step S135). When the determined result at step S135 is No (namely, the right end of the search area has not been detected), the block matching process is performed for a checkerwise block of (8 x 18) pixels and a residual is obtained (at step S136).

At this point, it is determined whether or not the value of the residual AD is smaller than the minimum value ADmin that has been obtained (at step S137). When the determined result at step S137 is Yes (namely, the value of the residual AD is smaller than the minimum value ADmin), the value of the residual AD is the minimum value ADmin. In addition, the moving vector VT is the current position (at step S138). Thereafter, the horizontal position is moved for two pixels (at step S139). The pixels of the current frame and the pixels of the reference frame are extracted checkerwise and stored as successive data to the memory. Thus, when the horizontal position is moved for two pixels, the address is moved for one position in the memory.

When the determined result at step S137 is No (namely, the value of the residual AD is not smaller than the minimum value ADmin), the flow advances to step S139. At step S139, the horizontal position is moved for two pixels. Thereafter, the flow returns to step S135.

At step S135, it is determined whether or not the right end of the search area has been detected. When the determined result at step S135 is No (namely, the right end of the search area has not been detected), the similar process is repeated. Thus, while the block is being moved to the right, residuals are obtained. The minimum residual is stored as the minimum ADmin.

When the determined result at step S135 is Yes (namely, the right end of the search area has been detected), the block is vertically moved for two pixels (at step S140). Thereafter, the flow returns to step S133. Thereafter, the similar process is performed.

When the determined result at step S133 is Yes (namely, the lower end of the search area has been detected), the result is stored as a moving vector MV (at step S141). The moving vector MV becomes a reference point of the fine searching process.

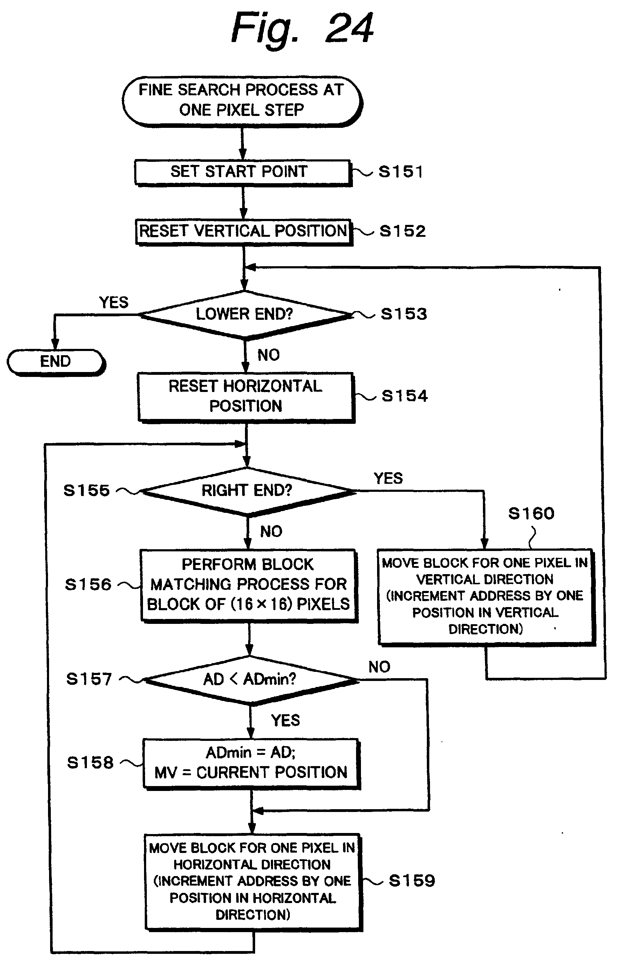

Fig. 24 is a flow chart showing the fine searching process at step S24 shown in Fig. 22. In the fine searching process, the memory that stores all pixels of the current frame and all pixels of the reference frame is used.

In Fig. 24, the start point is set at the upper left of the reference point obtained at step S141 shown in Fig. 23 (at step S151). The vertical search start position is reset to the upper end (at step S152). Thereafter, it is determined whether or not the lower end of the search area has been detected (at step S153). When the determined result at step S153 is No (namely, the lower end has not been detected), the horizontal positon is reset to the left end (at step S154).

Thereafter, it is determined whether or not the right end of the search area has been detected (at step S155). When the determined result at step S155 is No (namely, the right end of the search area has not been detected), the block matching process is performed for a block of (16 x 16) pixels and a residual is obtained (at step S156).

Thereafter, it is determined whether or not the value of the residual AD is smaller than the minimum value ADmin that has been obtained (at step S157). When the determined result at step S157 is Yes (namely, the value of the residual AD is smaller than the minimum value ADmin), the value of the residual AD is the minimum value ADmin (at step S158). The moving vector MV is the current position. The horizontal position is moved for one pixel (at step S159).

When the determined result at step S157 is No (namely, the value of the residual AD is not smaller than the minimum value ADmin), the flow advances to step S159. At step S159, the horizontal position is moved for one pixel. Thereafter, the flow returns to step S155.

At step S155, it is determined whether or not the right end of the search area has been detected. When the determined result at step S155 is No (namely, the right end of the search area has not been detected), the similar process is repeated. Thus, while the block is being moved from the left to the right in the search area, residuals are obtained. The minimum residual that has been obtained is stored as the minimum value ADmin.

When the determined result at step S155 is Yes (namely, the right end of the search area has been detected), the block is moved for one pixel in the vertical direction (at step S160). Thereafter, the flow returns to step S153. Thereafter, the similar process is performed.

When the determined result at step S153 is Yes (namely, the lower end of the search area has been detected), the moving vector VM is obtained and the process is completed.

In the above-described example, pixels of the reference frame and pixels of the current frame are extracted checkerwise. However, according to the present invention, the thin-out step and the thin-out method are not limited to those of the above-described example.

In the above-described example, when the logarithmic searching process is performed, in the memory that stores pixels that have been thinned out for each sample by the coarse searching process, the address is moved for each position so as to search a moving vector at two pixel step. Alternatively, by moving the address for two positions at a time, a searching process with four pixels at a time can be performed. Likewise, by moving the address for three positions at a time, a searching process with six pixels at a time can be performed. In the above-described example, the logarithmically searching process is performed by a coarse searching process with two pixels a at time and a fine searching process at one pixel step. Alternatively, the logarithmically searching process can be performed in a plurality of stages.

According to the present invention, pixels of a reference frame and pixels of the current frame are thinned out checkerwise and then the block matching process is performed. At this point, the pixels of the current frame and the pixels of the reference frame are stored as successive data to a memory. Thus, when the block matching process is performed, since an MMX instruction can be effectively used, the process can be performed at high speed.

In addition, a first memory that stores pixels of a current frame and pixels of a reference frame and a second memory that stores pixels of the current frame and pixels of the reference frame that have been thinned out checkerwise are prepared. With the second memory, a coarse searching process at two pixel step is performed. In this case, since the pixels of the current frame and the pixels of the reference frame that have been thinned out checkerwise are stored as successive data to the second memory, when the reference block is moved for each position in the second memory, a moving vector is searched at two pixel step. After the moving vector has been obtained by the coarse searching process at two pixel step, using the first memory, the fine searching process at one pixel step is performed in the vicinity of the point obtained in the coarse searching process.

Thus, when pixels of the current frame and pixels of the reference frame that have been obtained checkerwise are stored as successive data to a memory, since a moving vector is searched at two pixel step, the logarithmic searching process can be easily performed as well as the availability of an MMX instruction.

The moving vector calculating process as step S2 shown in Fig. 5 is performed by the block matching process. In the block matching process, a moving vector is obtained by a block matching process. In other words, a block with the same size and the same origin as a block divided from the current frame to be processed is extracted from a reference frame. While the block of the reference frame is being moved in a predetermined search area, the sum of the absolute values of the difference values between pixels of the block of the reference frame and pixels of the relevant block of the current frame is obtained as a residual. A block of the reference frame with the minimum residual is obtained. Thus, conventionally, since a residual is obtained as the sum of the absolute values of the difference values between pixels of a block of the current frame and pixels of the relevant block of a reference frame. However, since the number of calculating steps becomes huge, the moving vector calculating process cannot be performed at high speed.

Thus, according to a fourth embodiment of the present invention, a residual is obtained by calculating the sum of the absolute values of the difference values between pixels of the contour of a block of the current frame and pixels of the contour of the relevant block of a reference frame.

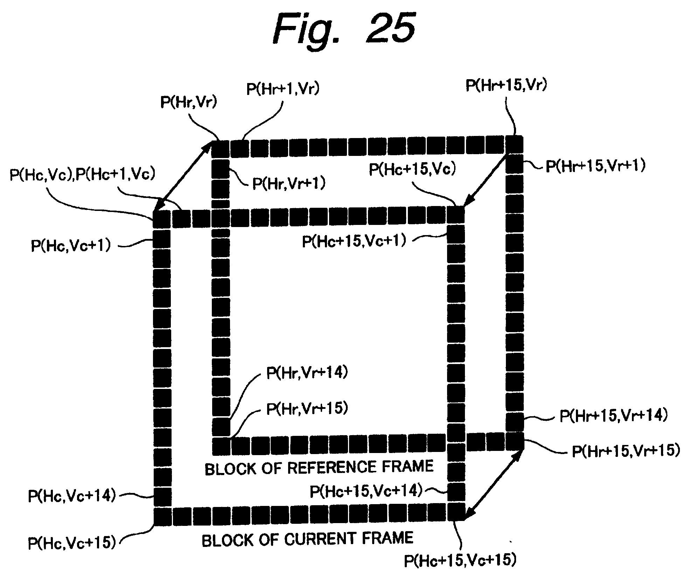

In other words, in Fig. 25, one block of a reference frame is composed of (16 x 16) pixels. Likewise, one block of a current frame is composed of (16 x 16) pixels. The value of each pixel of the reference frame is denoted by P(Hr, Vr). Likewise, the value of each pixel of the current frame is denoted by P(Hc, Vc). The sum of the absolute values of the difference values between upper contour pixels P(Hr, Vr) to P(Hr + 15, Vr) of the block of the reference frame and upper contour pixels P(Hc, Vc) to P(Hc + 15, Vc) of the relevant block of the current frame is obtained as a residual. The sum of the absolute values of the difference values between left contour pixels P(Hr, Vr + 1) to P(Hr, Vr + 14) of the block of the reference frame and left contour pixels P(Hc, Vc + 1) to P(Hc, Vc + 14) of the relevant block of the current frame is obtained as a residual. The sum of the absolute values of the difference values between right contour pixels P(Hr + 15, Vr + 1) to P(Hr + 15, Vr + 14) of the block of the reference frame and right contour pixels P(Hc + 15, Vc + 1) of the relevant block of the current frame is calculated as a residual. The sum of the absolute values of the difference values between lower contour pixels P(Hr, Vr + 15) to P(Hr + 15, Vr + 15) of the block of the reference frame and lower contour pixels P(Hc, Vc + 15) to P(Hc + 15, Vc + 15) of the relevant block of the current frame is obtained as a contour.

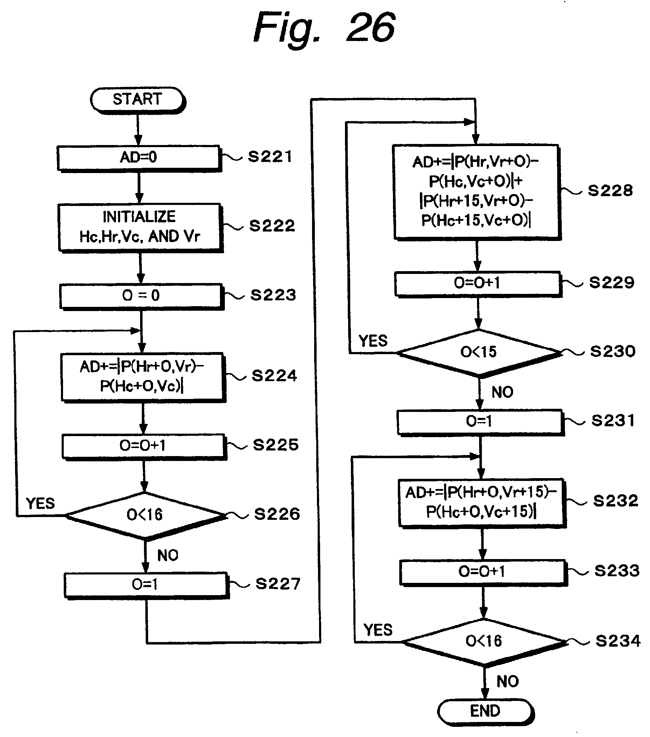

Fig. 26 is a flow chart showing a process for obtaining the sum of the absolute values of the difference values between contour pixels of a block of the current frame and contour pixels of the relevant block of a reference frame so as to obtain a residual.

Referring to Fig. 26, the value of the cumulation value AD is initialized to "0" (at step S221). Thereafter, the horizontal position Hc and the vertical position Vc of a pixel of the current frame and the horizontal position Hr and the vertical position Vr of a pixel of the reference frame are initialized (at step S222). The offset 0 is initialized to "0" (at step S223).

The absolute value of the difference value between the value of the pixel P(Hr + O, Vr) of the reference frame and the value of the pixel P(Hc + O, Vc) of the current frame is obtained as a cumulation value AD (at step S224). Thereafter, the offset O is incremented (at step S225). Thereafter, it is determined whether or not the offset O is less than 16 (at step S226). When the determined result at step S226 is Yes (namely, the offset O is less than 16), the flow returns to step S224.

In a loop from step S224 to step S226, the sum of the absolute value of the difference values between the upper contour pixels P(Hr, Vr) to P(Hr + 15, Vr) of the block of the reference frame and the upper contour pixels P(Hc, Vc) to P(Hc + 15, Vc) of the relevant block of the current frame is obtained.

In other words, since the offset O has been initialized to "0" at step S223, the absolute value of the difference value between the value of the upper left pixel P(Hr, Vr) of the block of the reference frame and the value of the upper left pixel P(Hc, Vc) of the relevant block of the current frame is obtained as the cumulation value AD.

Thereafter, the offset O is incremented at step S225. Thus, the absolute value of the difference value between the value of the pixel P(Hr + 1, Vr) of the block of the reference frame and the value of the pixel P(Hc + 1, Vc) of the relevant block of the current frame is obtained and added to the cumulation value AD. The steps in the loop are repeated until the offset O becomes "15". Thus, the sum of the absolute values of the difference values between the upper contour pixels P(Hr, Vr) to P(Hr + 15, Vr) of the block of the reference frame and the upper contour pixels P(Hc, Vc) to P(Hc + 15, Vc) of the relevant block of the current frame is obtained.

Thus, in the loop from step S224 to S226, the sum of the absolute values of the difference values between the upper contour pixels of the block of the current frame and the upper contour pixels of the relevant block of the reference frame is obtained. Thereafter it is determined whether or not the offset O is "16" at step S226. When the determined result at step S226 is No (namely, the offset O is "16"), since the right end of the block has been detected, the offset O is initialized to "1" (at step S227).

Thereafter, the difference value between the value of the pixel P(Hr, Vr + O) of the block of the reference frame and the value of the pixel P(Hc, Vc + O) of the relevant block of the current frame is obtained. The difference value between the value of the pixel P(Hr + 15, Vr + O) of the block of the reference frame and the value of the pixel P(Hc + 15, Vc + O) of the relevant block of the current frame is obtained. The sum of these absolute values is obtained as the cumulation value AD (at step S228). Thereafter, the offset O is incremented (at step S229). Thereafter, it is determined whether or not the offset O is less than "15" (at step S230). When the determined result at step S230 is Yes (namely, the offset O is less than "15"), the flow returns to step S228.

In the loop from step S228 to S230, the sum of the absolute values of the difference values between the left contour pixels P(Hr, Vr + 1) to P(Hr, Vr + 14) of the block of the reference frame and the left contour pixels P(Hc, Vc + 1) to P(Hc, Vc + 14) of the relevant block of the current frame is obtained. In addition, the sum of the absolute values of the difference values between the right contour pixels P(Hr + 15, Vr + 1) of the block of the reference frame and the right contour pixels P(Hc + 15, Vc + 1) to P(Hc + 15, Vc + 14) of the relevant block of the current frame is obtained.

Thereafter, it is determined whether or not the offset O is "15" at step S230. When the determined result at step S230 is No (namely, the offset O is "15"), since the lower end of the block has been detected, the offset O is initialized to "0" (at step S231).

Next, the absolute value of the difference value between the pixel P(Hr + O, Vr + 15) of the block of the reference frame and the pixel P(Hc + O, Vc + 15) of the relevant block of the current frame is obtained as the cumulation value AD (at step S232). Thereafter, the offset O is incremented (at step S233). Thereafter, it is determined whether or not the offset O is less than "16" (at step S234). When the determined result at step S234 is Yes (namely, the offset O is less than "16"), the flow returns to step S232.

In the loop from step S232 to S234, the sum of the absolute values of the difference values between the lower contour pixels P(Hr, Vr + 15) to P(Hr + 15, Vr + 15) of the block of the reference frame and the lower contour pixels P(Hc, Vc + 15) to P(Hc + 15, Vc + 15) of the relevant block of the current frame is obtained. When the determined result at step S234 is No (namely, the offset O is "16"), since the right end of the block has been detected, the process is completed.

In the loop from steps S224 to S226, the sum of the absolute values of the difference values between the upper contour pixels of the block of the current frame and the upper contour pixels of the relevant block of the reference frame is obtained. In the loop from steps S228 to S230, the sum of the absolute values of the difference values between the left contour pixels of the block of the current frame and the left contour pixels of the relevant block of the reference frame is obtained. In addition, the sum of the absolute values of the difference values between the right contour pixels of the block of the current frame and the right contour pixels of the relevant block of the reference frame is obtained. In the loop from steps S232 to S234, the sum of the absolute values of the difference values between the lower contour pixels of the block of the current frame and the lower contour pixels of the relevant block of the reference frame is obtained. Thus, the sum of the absolute values of the difference values between the four-side contour pixels of the block of the current frame and the four-side contour pixels of the relevant block of the reference frame is obtained.

Thus, when the sum of the absolute values of the difference values between the contour pixels of a block of the current frame and the contour pixels of the relevant block of the reference frame is obtained, the number of calculating steps for obtaining a residual can be remarkably decreased. Consequently, the block matching process can be performed at high speed. In other words, when the size of a block is (16 x 16) pixels, to calculate all pixels of one block, 256 subtractions are required. In contrast, to calculate contour pixels, only 60 subtractions are required. In addition, since the contour pixels are not thinned out, a moving vector can be obtained in the accuracy of one pixel.

Next, a picture encoding apparatus according to a fifth embodiment of the present invention will be described.

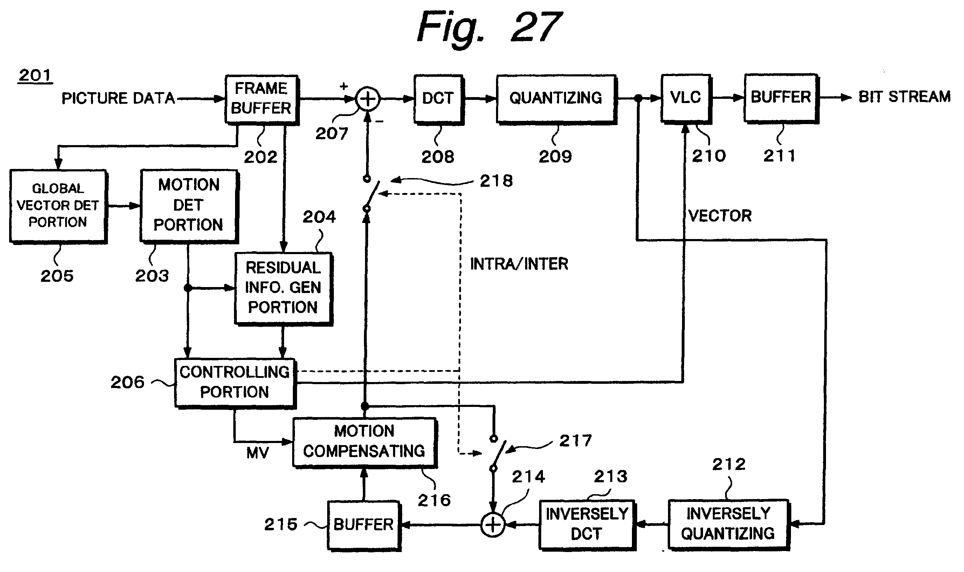

Fig. 27 shows the structure of the picture encoding apparatus 401 according to the fifth embodiment of the present invention. Referring to Fig. 27, the picture encoding apparatus (denoted by 401) has a frame buffer 202, a motion detecting portion 203, a residual information generating portion 204, a global vector detecting portion 205, and a controlling portion 206. Picture data is input to the frame buffer 202. The motion detecting portion 203 detects a motion component of picture data stored in the frame buffer 202. The residual information generating portion 204 generates motion residual information AD. The global vector detecting portion 205 detects a moving vector of the entire picture. The controlling portion 206 outputs parameters and so forth for an encoding process to individual portions of the apparatus.

The frame buffer 202 inputs picture data from an external apparatus and stores picture data frame by frame. The frame buffer 202 outputs picture data to the motion detecting portion 203, the residual information generating portion 204, the global vector detecting portion 205, and a calculating portion 207 at a predetermined timing under the control of the controlling portion 206.

The global vector detecting portion 205 samples picture data (received from the frame buffer 202) as a plurality of macro blocks and detects a moving vector of the entire macro blocks. In other words, since the global vector detecting portion 205 obtains a moving vector of all the macro blocks, the global vector detecting portion 205 obtains a moving vector of the entire picture (namely, a global vector) and supplies the detected global vector to the motion detecting portion 203.

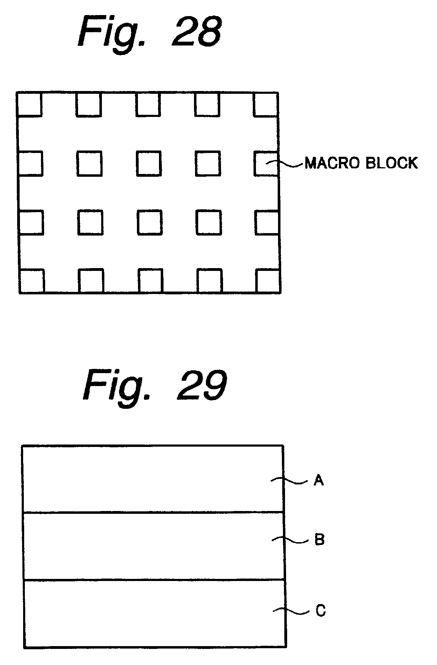

In reality, as shown in Fig. 28, the global vector detecting portion 205 extracts a plurality of macro blocks at different positions of one picture and detects one moving vector of the extracted macro blocks. At this point, the global vector detecting portion 205 applies a moving vector of each of the extracted macro blocks to an evaluation function so as to obtain the global vector. The global vector detecting portion 205 uses as an evaluation function a function expression for calculating the average of moving vectors of extracted macro blocks so as to obtain the global vector.

Alternatively, the global vector detecting portion 205 may extract a plurality of adjacent macro blocks so as to obtain a global vector. In other words, the global vector detecting portion 205 may obtain a global vector with each macro block of (16 x 16) pixels or with each small area of for example (32 x 32) pixels.

As another alternative method, as shown in Fig. 29, the global vector detecting portion 205 may obtain global vectors for areas A, B, and C into which one screen is vertically divided. Thus, in the case that the area A is a picture of a mountain that has been photographed as a far-distance picture and the area C is a picture of a flower that has been photographed as a near-distance picture and that the area A and the area C have been panned, even if one screen has two pictures that move each other, global vectors for individual areas can be obtained. Each area may overlap with each other.

The motion detecting portion 203 detects a moving vector MV of each macro block (composed of 16 x 16 pixels) of picture data stored in the frame buffer 202. The motion detecting portion 203 pattern-matches a macro block of a reference frame with a macro block that is read from the frame buffer 202 and detects a moving vector MV. The motion detecting portion 203 supplies the detected moving vector MV to the residual information generating portion 204 and the controlling portion 206. At this point, the motion detecting portion 203 generates a moving vector MV with the global vector received from the global vector detecting portion 205. In other words, when the motion detecting portion 203 pattern-matches each macro block in a predetermined search area, the motion detecting portion 203 varies each macro block in the search area with an offset of the global vector and obtains a moving vector MV. The motion detecting portion 203 varies the center position of the search area corresponding to the global vector so as to pattern-match each macro block.

The residual information generating portion 204 receives the moving vector MV from the motion detecting portion 203. In addition, the residual information generating portion 204 receives each macro block of picture data from the frame buffer 202. With the moving vector MV and picture data, the residual information generating portion 204 obtains the sum of the absolute values of difference values between moving components as residual information AD and supplies the residual information AD to the controlling portion 206.

The controlling portion 206 determines a macro block type for the encoding process with the moving vector MV received from the motion detecting portion 203 and the motion residual information AD received from the residual information generating portion 204. The controlling portion 206 determines whether the current macro block is an inter-macro block or an intra-macro block corresponding to for example the picture type. The inter-macro block is a macro block that is motion-compensated with a moving vector MV and encoded with a residual. In contrast, the intra-macro block is a macro block that is simply encoded without moving components.

The controlling portion 206 generates control information that causes switches 217 and 218 to operate corresponding to the determined macro block type. In addition, the controlling portion 206 supplies the moving vector MV received from the motion detecting portion 203 to the motion compensating portion 216.

The picture encoding apparatus 201 also has a calculating portion 207, a DCT process portion 208, a quantizing process portion 209, a variable length code encoding portion 210, and a buffer 211. The calculating portion 207 receives a picture signal from the frame buffer 202. The DCT process portion 208 performs a DCT (Discrete Cosine Transform) process for picture data. The quantizing process portion 209 quantizes a DCT coefficient received from the DCT process portion 208. The variable length code encoding portion 210 compresses a DCT coefficient received from the quantizing process portion 209 with variable length code. The buffer 211 stores picture data received from the variable length code encoding portion 210.

The DCT process portion 208 performs a two-dimensional DCT process for each macro block of (8 x 8) pixels of picture data received from the calculating portion 207. The DCT process portion 208 supplies a DCT coefficient to the quantizing process portion 209.

The quantizing process portion 209 quantizes a DCT coefficient received from the DCT process portion 208 with a quantizing scale that varies corresponding to each macro block. The quantizing process portion 209 supplies the quantized DCT coefficient to the variable length code encoding portion 210 and an inversely quantizing process portion 212.

The variable length code encoding portion 210 receives a DCT coefficient from the quantizing process portion 209 and a moving vector MV from the controlling portion 206. With such information, the variable length code encoding portion 210 performs an encoding process. The variable length code encoding portion 210 performs an encoding process with variable length code corresponding to MPEG syntax and performs a header process, a code generating process, and so forth so as to generate picture data. The variable length code encoding portion 210 supplies the encoded picture data to the buffer 211.

The buffer 211 stores picture data received from the variable length code encoding portion 210 and outputs the picture data as a bit stream at a predetermined timing under the control of the controlling portion 206.

In addition, the picture encoding apparatus 201 also has an inversely quantizing process portion 212, an inversely DCT process portion 213, a calculating unit 214, a buffer 215, and a motion compensating portion 216. The inversely quantizing process portion 212 inversely quantizes a DCT coefficient received from the quantizing process portion 209. The inversely DCT process portion 213 inversely performs a DCT process for a DCT coefficient received from the inversely quantizing process portion 212. The calculating unit 214 receives picture data from the inversely DCT process portion 213. The buffer 215 stores picture data. The motion compensating portion 216 motion-compensates picture data received from the buffer 215.

The inversely quantizing process portion 212 inversely quantizes a DCT coefficient received from the quantizing process portion 209. The inversely quantizing process portion 212 inversely quantizes data received from the quantizing process portion 209 with the quantizing scale thereof and supplies the resultant DCT coefficient to the inversely DCT process portion 213.

The inversely DCT process portion 213 inversely performs a DCT process for a DCT coefficient received from the inversely quantizing process portion 212 and supplies the resultant DCT coefficient to the calculating unit 214. The calculating unit 214 receives picture data that has been processed in the inversely DCT process portion 213. In addition, the calculating unit 214 receives picture data (that has been motion-compensated) through the switch 217. The calculating unit 214 adds the motion-compensated picture data and the picture data received from the inversely DCT process portion 213 and supplies the resultant data to the buffer 215.

The buffer 215 receives each macro block of picture data from the calculating unit 214 and stores the picture data. When the motion compensating portion 216 motion-compensates picture data, predictive picture data is read from the buffer 215.

The motion compensating portion 216 reads each macro block of predictive picture data from the buffer 215 corresponding to a moving vector MV.

When the picture encoding apparatus 201 generates an I (Intra) picture, each macro block of picture data stored in the frame buffer 202 is supplied to the DCT process portion 208 and the quantizing process portion 209 through the calculating unit 207. The DCT process portion 208 performs the DCT process for each macro block of the picture data. The quantizing process portion 209 quantizes the picture data received from the DCT process portion 208. The variable length code encoding portion 210 encodes the picture data received from the quantizing process portion 209 with variable length code and outputs the resultant data as a bit stream through the buffer 211. The resultant signal that has been processed by the quantizing process portion 209 and the variable length code encoding portion 210 is restored to picture data by the inversely quantizing process portion 212 and the inversely DCT process portion 213 and temporarily stored to the buffer 215.

When the picture encoding apparatus 201 generates a P (predictive) picture, the motion detecting portion 203 detects a moving component of picture data stored in the frame buffer 202 so as to generate a moving vector MV. In addition, the residual information generating portion 204 generates residual information AD. The moving vector MV is supplied to the motion compensating portion 216 through the controlling portion 206. The motion compensating portion 216 motion-compensates picture data stored in the buffer 215 (when the I picture is generated, the picture data is stored to the buffer 215). Thus, the motion compensating portion 216 generates predictive data. The motion compensating portion 216 motion-compensates each macro block. The switches 217 and 218 are closed corresponding to a switch control signal received from the controlling portion 206. The calculating unit 207 subtracts the predictive picture data received from the motion compensating portion 216 from the picture data stored in the frame buffer 202. The DCT process portion 208 and the quantizing process portion 209 perform the above-described processes. The variable length code encoding portion 210 encodes picture data and outputs the resultant data as a bit stream through the buffer 211.

When the picture encoding apparatus 201 generates a B (Bidirectionally predictive) picture, the motion compensating portion 216 motion-compensates picture data of the preceding frame stored in the buffer 215 and picture data of the next frame so as to generate predictive picture data. The calculating unit 207 subtracts the predictive picture data from the picture data stored in the frame buffer 202. The DCT process portion 208 and the quantizing process portion 209 perform the above-described processes. The variable length code encoding portion 210 encodes the data received from the calculating unit 207 with variable length code and outputs the resultant data as a bit stream through the buffer 211.

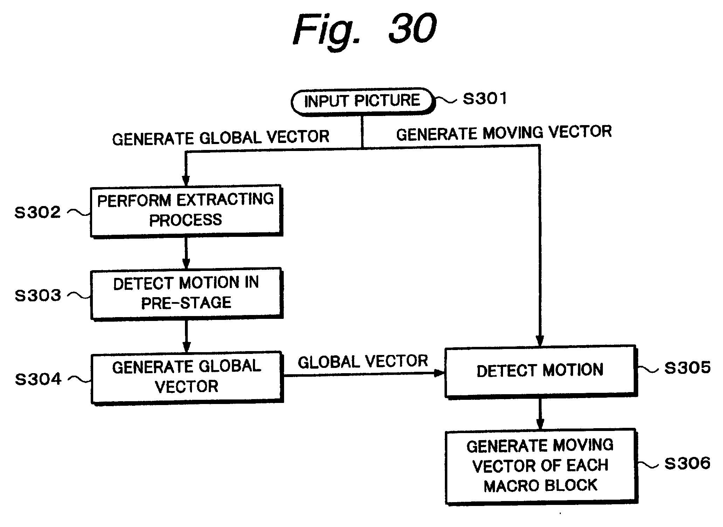

Fig. 30 is a flow chart showing a process for detecting a moving vector MV. The process is performed by the picture encoding apparatus 201.

Referring to Fig. 30, at step S301, picture data of one frame is input to the frame buffer 202. In the process shown in Fig. 30, at steps S302 to S304, a global vector is detected. At step S305, the motion detecting portion 203 generate a moving vector MV of each macro block.

At step S302, the global vector detecting portion 205 inputs picture data of each frame stored in the frame buffer 202 and extracts a plurality of macro blocks from the picture data as shown in Fig. 28. At step S302, as shown in Fig. 29, one screen may be divided into a plurality of areas and a plurality of macro blocks may be extracted therefrom.

At step S303, the global vector detecting portion 205 detects a moving vector of each macro block detected at step S302.

At step S304, the global vector detecting portion 205 applies a moving vector of each macro block to an evaluation function so as to generate a global vector. The global vector detecting portion 205 calculates the average of moving vectors of macro blocks and generates a global vector.

At step S305, the motion detecting portion 203 receives each macro block of picture data, pattern-matches each macro block with the global vector detected at step S304, and detects a moving vector of each macro block. At this point, the motion detecting portion 203 varies the center position of a search area corresponding to the global vector and pattern-matches each macro block.

At step S306, the motion detecting portion 203 detects a moving vector MV of each macro block corresponding to the detected result at step S305 and supplies the moving vector VM of each macro block to the residual information generating portion 204 and the controlling portion 206.

In the picture encoding apparatus 201, before the motion detecting portion 203 generates a moving vector MV of each macro block, the global vector detecting portion 205 detects a global vector that represents one moving vector of the entire picture. Thus, the motion detecting portion 203 does not need to detect a moving vector MV of each macro block in a wide area. Consequently, the process for detecting a moving vector MV can be performed with a reduced number of calculating steps. In other words, in the picture encoding apparatus 201, even if a picture that is moving is panned, it is not necessary to cause the global vector detecting portion 205 to obtain a global vector of the entire picture and to detect a moving vector of each macro block in a wide search area.

In addition, using the picture encoding apparatus 201, even if a picture moves at high speed on the entire screen, a moving vector of each macro block can be easily detected.

Moreover, using the picture encoding apparatus 201, since one screen is divided into a plurality of areas. The global vector detecting portion 5 calculates a global vector of each area. Thus, even if a picture largely moves on the screen, a moving vector MV can be effectively detected.

Next, a sixth embodiment of the present invention will be described.

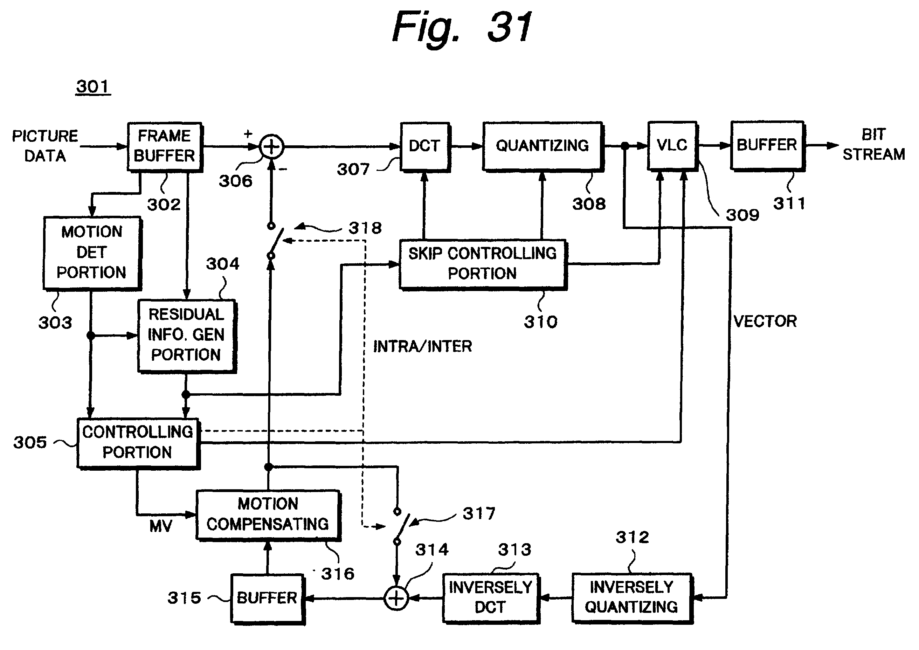

Fig. 31 is a block diagram showing the structure of a picture encoding apparatus according to the sixth embodiment of the present invention.

Fig. 31 shows the structure of the picture encoding apparatus according to the sixth embodiment of the present invention. Referring to Fig. 31, the picture encoding apparatus (denoted by 301) has a frame buffer 302, a motion detecting portion 303, a residual information generating portion 304, and a controlling portion 305. Picture data is input to the frame buffer 302. The motion detecting portion 303 detects a motion component of picture data stored in the frame buffer 302. The residual information generating portion 304 generates motion residual information AD. The controlling portion 306 outputs parameters and so forth for an encoding process to individual portions of the apparatus.

The frame buffer 302 inputs picture data from an external apparatus and stores picture data frame by frame. The frame buffer 302 outputs picture data to the motion detecting portion 303, the residual information generating portion 304, and a calculating portion 307 at a predetermined timing under the control of the controlling portion 305.

The motion detecting portion 303 detects a moving vector MV of each macro block (composed of 16 x 16 pixels) of picture data stored in the frame buffer 302. The motion detecting portion 303 pattern-matches a macro block of a reference frame with a macro block that is read from the frame buffer 302 and detects a moving vector MV. The motion detecting portion 303 supplies the detected moving vector MV to the residual information generating portion 304 and the controlling portion 305.

The residual information generating portion 304 receives the moving vector MV from the motion detecting portion 303. In addition, the residual information generating portion 304 receives each macro block of picture data from the frame buffer 302. With the moving vector MV and picture data, the residual information generating portion 304 obtains the sum of the absolute values of difference values between moving components as residual information AD and supplies the residual information AD to the controlling portion 305 and a skip controlling portion 310.

The controlling portion 305 determines a macro block type for the encoding process with the moving vector MV received from the motion detecting portion 303 and the motion residual information AD received from the residual information generating portion 304. The controlling portion 305 determines whether the current macro block is an inter-macro block or an intra-macro block corresponding to for example the picture type. The inter-macro block is a macro block that is motion-compensated with a moving vector MV and encoded with a residual. In contrast, the intra-macro block is a macro block that is simply encoded without moving components.

The controlling portion 305 generates control information that causes switches 317 and 318 to operate corresponding to the determined macro block type. In addition, the controlling portion 305 supplies the moving vector MV received from the motion detecting portion 303 to the motion compensating portion 316.

The picture encoding apparatus 301 also has a calculating portion 306, a DCT process portion 307, a quantizing process portion 308, a variable length code encoding portion 309, the above-mentioned skip controlling portion 310, and a buffer 311. The calculating portion 306 receives a picture signal from the frame buffer 302. The DCT process portion 307 performs a DCT (Discrete Cosine Transform) process for picture data. The quantizing process portion 308 quantizes a DCT coefficient received from the DCT process portion 307. The variable length code encoding portion 309 compresses a DCT coefficient received from the quantizing process portion 308 with variable length code. The skip controlling portion 310 controls the DCT process portion 307, the quantizing process portion 308, the variable length code encoding portion 309, and so forth. The buffer 311 stores picture data that has been encoded.

The DCT process portion 307 performs a two-dimensional DCT process for each macro block of (8 x 8) pixels of picture data received from the calculating portion 306. The DCT process portion 307 supplies a DCT coefficient to the quantizing process portion 308.

The quantizing process portion 308 quantizes a DCT coefficient received from the DCT process portion 307 with a quantizing scale that varies corresponding to each macro block. The quantizing process portion 308 supplies the quantized DCT coefficient to the variable length code encoding portion 309 and an inversely quantizing process portion 312. In addition to the quantizing process, the quantizing process portion 308 generates a CBP (Coded Block Pattern). When the quantizing process portion 308 generates the CBP, it supplies information that represents the CBP to the variable length code encoding portion 309.

The skip controlling portion 310 generates a skip control signal that causes the DCT process portion 307 and the quantizing process portion 308 to skip the DCT process and the quantizing process corresponding to the motion residual information received from the residual information generating portion 304. The skip controlling portion 310 receives motion residual information AD from the motion detecting portion 303, predicts the value of the CBP with the motion residual information AD, and sets the DCT coefficient to "0" corresponding to the value of the CBP. When the skip controlling portion 310 sets the DCT coefficient to "0", the skip controlling portion 310 supplies the skip control signal to the motion compensating portion 316, the DCT process portion 307, the quantizing process portion 308, and the variable length code encoding portion 309. Thus, when the skip controlling portion 310 sets the value of the CBP (namely, the DCT coefficient) to "0" it causes such portions to skip their processes.

When the skip controlling portion 310 sets the DCT coefficient to "0", the skip controlling portion 310 compares the motion residual information AD received from the residual information generating portion 304 with a predetermined value. The predetermined value is designated by for example the user. In other words, when the motion residual information AD is smaller than the predetermined value, the skip controlling portion 310 determines that the value of the CBP is small and supplies a skip control signal (that substitutes "0" to the DCT coefficient) to the above-described portions. In contrast, when the motion residual information AD is not smaller than the predetermined value, the skip controlling portion 310 does not generate the skip control signal.

Alternatively, the skip controlling portion 310 may determine the predetermined value with information obtained in the encoding process (the information is such as the bit rate of the variable length code encoding process of the variable length code encoding portion 309 and the quantizing scale of the quantizing process of the quantizing process portion 308) and compares the predetermined value with the motion residual information AD. At this point, the skip controlling portion 310 compares the motion residual information for each macro block with the predetermined value and generates the skip control signal corresponding to the compared result.

As another alternative method, the skip controlling portion 310 may use the mean value MAD of the motion residual information AD of each macro block instead of the motion residual information AD. In this case, the mean value MAD is generated by the motion compensating portion 316. The skip controlling portion 310 receives the mean value MAD from the motion compensating portion 316 and sets the DCT coefficient to "0" corresponding to the mean value MAD. The detail operation of the skip controlling portion 310 will be described later.

The variable length code encoding portion 309 receives a DCT coefficient from the quantizing process portion 308 and a moving vector MV from the controlling portion 305. With such information, the variable length code encoding portion 309 performs an encoding process. The variable length code encoding portion 309 performs an encoding process with variable length code corresponding to MPEG syntax and performs a header process, a code generating process, and so forth so as to generate picture data. The variable length code encoding portion 309 supplies the encoded picture data to the buffer 311.

The variable length code encoding portion 309 receives information that represents that the value of the CBP is "0" from the quantizing process portion 308. When there is no moving vector MV, the variable length code encoding portion 309 may skip a macro block corresponding to the macro block type.

The buffer 311 stores picture data received from the variable length code encoding portion 309 and outputs the picture data as a bit stream at a predetermined timing under the control of the controlling portion 305.

In addition, the picture encoding apparatus 301 also has an inversely quantizing process portion 312, an inversely DCT process portion 313, a calculating unit 314, a buffer 315, and a motion compensating portion 316. The inversely quantizing process portion 312 inversely quantizes a DCT coefficient received from the quantizing process portion 308. The inversely DCT process portion 313 inversely performs a DCT process for a DCT coefficient received from the inversely quantizing process portion 312. The calculating unit 314 receives picture data from the inversely DCT process portion 313. The buffer 315 stores picture data. The motion compensating portion 316 motion-compensates picture data received from the buffer 315.

The inversely quantizing process portion 312 inversely quantizes a DCT coefficient received from the quantizing process portion 308. The inversely quantizing process portion 312 inversely quantizes data received from the quantizing process portion 308 with the quantizing scale thereof and supplies the resultant DCT coefficient to the inversely DCT process portion 313.

The inversely DCT process portion 313 inversely performs a DCT process for a DCT coefficient received from the inversely quantizing process portion 312 and supplies the resultant DCT coefficient to the calculating unit 314. The calculating unit 314 receives picture data that has been processed in the inversely DCT process portion 313. In addition, the calculating unit 314 receives picture data (that has been motion-compensated) through the switch 317. The calculating unit 314 adds the motion-compensated picture data and the picture data received from the inversely DCT process portion 313 and supplies the resultant data to the buffer 315.

The buffer 315 receives picture data from the calculating unit 314 and stores the picture data. When the motion compensating portion 316 motion-compensates picture data, predictive picture data is read from the buffer 315.

The motion compensating portion 316 reads each macro block of predictive picture data from the buffer 315 corresponding to a moving vector MV. The motion compensating portion 316 supplies the motion vector MV received from the controlling portion 305 to the calculating portion 306 corresponding to the predictive picture data.

When the picture encoding apparatus 301 generates an I (Intra) picture, each macro block of picture data stored in the frame buffer 302 is supplied to the DCT process portion 307 and the quantizing process portion 308 through the calculating unit 306. The DCT process portion 307 performs the DCT process for each macro block of the picture data. The quantizing process portion 308 quantizes the picture data received from the DCT process portion 307. The variable length code encoding portion 309 encodes the picture data received from the quantizing process portion 308 with variable length code and outputs the resultant data as a bit stream through the buffer 311. The resultant signal that has been processed by the quantizing process portion 308 and the variable length code encoding portion 309 is restored to picture data by the inversely quantizing process portion 312 and the inversely DCT process portion 313 and temporarily stored to the buffer 315.

When the picture encoding apparatus 301 generates a P (predictive) picture, the motion detecting portion 303 detects a moving component of picture data stored in the frame buffer 302 so as to generate a moving vector MV. In addition, the residual information generating portion 304 generates residual information AD. The moving vector MV is supplied to the motion compensating portion 316 through the controlling portion 305. The motion compensating portion 316 motion-compensates picture data stored in the buffer 315 (when the I picture is generated, the picture data is stored to the buffer 315). Thus, the motion compensating portion 316 generates predictive data. The motion compensating portion 316 motion-compensates each macro block. The switches 317 and 318 are closed corresponding to a switch control signal received from the controlling portion 305. The calculating unit 306 subtracts the predictive picture data received from the motion compensating portion 316 from the picture data stored in the frame buffer 302. The DCT process portion 307 and the quantizing process portion 308 perform the above-described processes. The variable length code encoding portion 309 encodes picture data and outputs the resultant data as a bit stream through the buffer 311.

When the picture encoding apparatus 301 generates a B (Bidirectionally predictive) picture, the motion compensating portion 316 motion-compensates picture data of the preceding frame stored in the buffer 315 and picture data of the next frame so as to generate predictive picture data. The calculating unit 306 subtracts the predictive picture data from the picture data stored in the frame buffer 302. The DCT process portion 307 and the quantizing process portion 308 perform the above-described processes. The variable length code encoding portion 309 encodes the data received from the calculating unit 306 with variable length code and outputs the resultant data as a bit stream through the buffer 311.

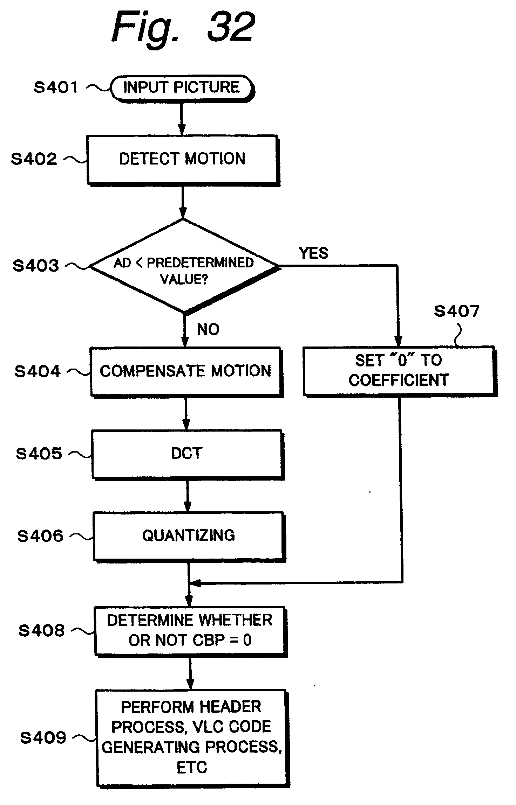

Fig. 32 is a flow chart showing an encoding process of the picture encoding apparatus 301. In the flow chart shown in Fig. 32, a moving vector MV is detected from picture data stored in the frame buffer 302. A P picture or a B picture is generated corresponding to the detected moving vector MV.

At step S401, picture data of one frame is input to the frame buffer 302.

At step S402, the motion detecting portion 303 detects the motion of the picture data stored in the frame buffer 302 and detects the motion as a moving vector MV. The residual information generating portion 304 generates motion residual information AD with the moving vector MV. The moving vector MV and the motion residual information AD are supplied to the controlling portion 305 and the skip controlling portion 310, respectively.

At step S403, the skip controlling portion 310 compares the motion residual information AD received from the residual information generating portion 304 with a predetermined value. When the determined result at step S403 is No (namely, the motion residual information AD is larger than the predetermined value), the flow advances to step S404. In contrast, when the determined result at step S403 is Yes (namely, the motion residual information AD is not larger than the predetermined value), the flow advances to step S407.

At step S404, with the motion vector MV received from the controlling portion 305, the predictive picture data is generated and supplied to the calculating portion 306. Corresponding to the calculated result of the calculating unit 306, the motion compensating portion 316 compensates the motion of the picture data.

At step S405, the calculating unit 306 subtracts the predictive picture data that has been motion-compensated at step S404 from the picture data received from the frame buffer 302. The DCT process portion 307 performs the DCT process for the picture data received from the calculating unit 306.

At step S406, the quantizing process portion 308 quantizes the DCT coefficient generated by the DCT process portion 307 at step S405.

In contrast, when the determined result at step S403 is Yes (namely, the motion residual information AD is not larger than the predetermined value), the flow advances to step S407. At step S407, the skip controlling portion 310 generates the skip control signal that causes the DCT process portion 307, the quantizing process portion 308, the variable length code encoding portion 309, and the motion compensating portion 316 to skip their processes and supplies the skip control signal to these portions. In other words, picture data stored in the buffer 315 is supplied to the variable length code encoding portion 309.

At step S408, the variable length code encoding portion 309 determines whether or not the value of the CBP is "0". When "0" has been set to the DCT coefficient at step S407, the variable length code encoding portion 309 determines that the value of the CBP is "0".

At step S409, the variable length code encoding portion 309 performs for example a header process and a variable length code generating process and outputs the encoded picture data as a bit stream through the buffer 311. A macro block of which the value of the CBP is "0" determined at step S408 is data composed of header, MB increment, CBP, vector, and so forth rather than data of (16 x 16) pixels. In other words, when a macro block of which the value of the CBP is "0" is detected, the macro block is output as the same picture as the preceding picture.

In the process of the picture encoding apparatus 301 (see Fig. 32), the predetermined value and the motion residual information AD are compared so as to determine whether or not the DCT coefficient is "0". Alternatively, instead of the predetermined value, it can be determined whether or not the DCT coefficient is "0" corresponding to an evaluation function with a quantizing scale received from the quantizing process portion 308, an occupation amount of picture data stored in the buffer 315, a bit rate, and so forth.

Since the picture encoding apparatus 301 has the skip controlling portion 310 that skips the motion compensating process, the DCT process, and the quantizing process corresponding to the compared result of which the motion residual information AD has been compared with the predetermined value, the process time necessary for the encoding process for picture data whose DCT coefficient finally becomes "0" can be shortened.

In addition, according to the picture encoding apparatus 301, the process time for the DCT process and the quantizing process in a real time encoder and so forth is not strict. Thus, the picture encoding apparatus 301 can be easily designed and power consumption thereof can be reduced.

In addition, according to the picture encoding apparatus 301, even if the encoding process is performed by software, the load of the process of for example a CPU (Central Processing Unit) can be reduced.

According to the present invention, when a moving vector is obtained, a block of a reference frame and a block of the current frame are orthogonally transformed into frequency data. When picture data is transformed into frequency data and a residual between the block of the reference frame and the block of the curent frame is obtained, the number of calculating steps is remarkably decreased. Thus, the process can be performed at high speed. Consequently, the process can be sufficiently performed by software.

According to the present invention, in a loop of a block matching calculation, the sum of the absolute values of the difference values between pixels of a block of the current frame and pixels of the relevant block of the reference frame is compared with a predetermined threshold value. When the sum exceeds the threshold value, the process is stopped. Thus, since the number of calculating steps is deceased, a moving vector can be searched at high speed.

The initial value of the threshold value is set corresponding to the value of the sum of mean discrete absolute values (MAD) and the residual AD (0, 0) at the origin. In the case that the threshold value is set corresponding to the sum MAD and the residual AD (0, 0) at the origin, when the inter-frame encoding process is performed, a moving vector can be securely detected. In contrast, when the intra-frame encoding process is performed, the process is stopped. Thus, the block matching process can be effectively performed.

In addition, when a moving vector is searched at first time, the threshold value obtained corresponding to the sum MAD and the residual AD (0, 0) at the origin is used. As the threshold value for the block matching process performed at second time for the same block, the original threshold value or the detected sum is used whichever smaller. In other words, since the threshold value that is the minimum value that has been obtained so far is used, a moving vector can be effectively detected.

As described above, according to the motion detecting apparatus and the motion detecting method of the present invention, a plurality of macro blocks are extracted from a picture. A moving vector of the extracted macro blocks is detected. With the detected moving vector, a moving vector of the entire picture is calculated. With the moving vector of the entire picture, a moving vector of each macro block is calculated. Thus, before a moving vector of each macro block is calculated, a moving vector of the entire picture can be obtained. Consequently, according to the motion detecting apparatus and the motion detecting method of the present invention, a moving vector of a picture that largely moves on the entire screen can be easily detected. In addition, the number of calculating steps for the process for detecting the motion of a picture can be remarkably decreased.

As described above, according to the picture encoding apparatus and the picture encoding method of the present invention, a moving vector of a pixel block of picture data is detected and motion residual information thereof is generated. The motion residual information is compared with a predetermined value. A predetermined process necessary for an encoding process is performed for picture data. Corresponding to the determined result, a predetermined process of a picture data process means is skipped. The process time for the encoding process for a picture whose DCT coefficient finally becomes "0" can be shortened.

According to the present invention, when a moving vector is obtained by a block matching process, a residual is obtained with the sum of the absolute values of the difference values between contour pixels of a block of a reference frame and contour pixels of the relevant block of the current frame. Thus, the number of calculating steps is decreased. Consequently, the process can be performed at high speed. Since the sum of the absolute values of the difference values between all contour pixels of a block of the reference frame and all contour pixels of the relevant block of the current frame is obtained, a moving vector can be accurately detected.

Although the present invention has been shown and described with respect to a best mode embodiment thereof, it should be understood by those skilled in the art that the foregoing and various other changes, omissions, and additions in the form and detail thereof may be made therein without departing from the spirit and scope of the present invention.

**Claims**

1.  A moving vector calculating method, comprising the steps of:

    (a) extracting a block from a reference picture corresponding to a block of a current picture to be processed, the size of the block of the reference picture being the same as the size of the block of the current picture, the origin of the block of the reference picture matching the origin of the block of the current picture;
    (b) while moving the block of the reference picture in a predetermined search area, obtaining a residual between the block of the current picture and the block of the reference picture;
    (c) detecting a block with the minimum residual from the reference picture so as to calculate a moving vector;
    (d) orthogonally transforming pixel data of a block of the reference picture and pixel data of a block of the current picture; and
    (e) obtaining a residual between orthogonally transformed data of the block of the reference picture and orthogonally transformed data of each block of the current picture.

2.  The moving vector calculating method as set forth in claim 1,
    wherein step (d) is performed by Hadamard transforming method.

3.  The moving vector calculating method as set forth in claim 1, further comprising the steps of:

    dividing each of a block of the reference picture and a block of the current picture into a plurality of blocks; and
    orthogonally transforming each of the divided blocks.

4.  A record medium on which a moving vector calculating program has been recorded, the moving vector calculating program causing a system that has the record medium to perform the steps of:

    (a) extracting a block from a reference picture corresponding to a block of a current picture to be processed, the size of the block of the reference picture being the same as the size of the block of the current picture, the origin of the block of the reference picture matching the origin of the block of the current picture;
    (b) while moving the block of the reference picture in a predetermined search area, obtaining a residual between the block of the current picture and the block of the reference picture;
    (c) detecting a block with the minimum residual from the reference picture so as to calculate a moving vector;
    (d) orthogonally transforming pixel data of a block of the reference picture and pixel data of a block of the current picture; and
    (e) obtaining a residual between orthogonally transformed data of the block of the reference picture and orthogonally transformed data of each block of the current picture.

5.  The record medium as set forth in claim 4, wherein step (d) is performed by Hadamard transforming method.

6.  The record medium as set forth in claim 4, further comprising the steps of:

    dividing each of a block of the reference picture and a block of the current picture into a plurality of blocks; and
    orthogonally transforming each of the divided blocks.

7.  A moving vector calculating method, comprising the steps of:

    (a) extracting a block from a reference picture corresponding to a block of a current picture to be processed, the size of the block of the reference picture being the same as the size of the block of the current picture, the origin of the block of the reference picture matching the origin of the block of the current picture;
    (b) while moving the block of the reference picture in a predetermined search area, obtaining a residual between the block of the current picture and the block of the reference picture;
    (c) detecting a block with the minimum residual from the reference picture so as to calculate a moving vector;
    (d) while calculating a residual between pixels of a block of the reference picture and pixels of a block of the current picture, comparing the obtained residual with a predetermined threshold value; and

(e) when the residual is larger than the predetermined threshold value, stopping the calculation of the moving vector; and

(f) setting the initial value of the predetermined threshold value corresponding to a characteristic of a picture.

8. The moving vector calculating method as set forth in claim 7,
   wherein the initial value of the predetermined threshold value is set corresponding to the sum of the absolute values of the difference values between values of pixels of the same picture and the mean value of the pixels thereof.

9. The moving vector calculating method as set forth in claim 7,
   wherein the initial value of the predetermined threshold value is set corresponding to a residual at the origin.

10. The moving vector calculating method as set forth in claim 7,
    wherein the initial value of the predetermined threshold value is set corresponding to the sum of the absolute values of the difference values between values of pixels of the same picture and the mean value of the pixels thereof and a residual at the origin.

11. The moving vector calculating method as set forth in claim 7,
    wherein the predetermined threshold value is the minimum value of residuals that have been obtained so far.

12. A record medium on which a moving vector calculating program has been recorded, the moving vector calculating program causing a system that has the record medium to perform the steps of:

    (a) extracting a block from a reference picture corresponding to a block of a current picture to be processed, the size of the block of the reference picture being the same as the size of the block of the current picture, the origin of the block of the reference picture matching the origin of the block of the current picture;
    (b) while moving the block of the reference picture in a predetermined search area, obtaining a residual between the block of the current picture and the block of the reference picture;
    (c) detecting a block with the minimum residual from the reference picture so as to calculate a moving vector;
    (d) while calculating a residual between pixels of a block of the reference picture and pixels of a block of the current picture, comparing the obtained residual with a predetermined threshold value; and

(e) when the residual is larger than the predetermined threshold value, stopping the calculation of the moving vector; and

(f) setting the initial value of the predetermined threshold value corresponding to a characteristic of a picture.

13. The record medium as set forth in claim 12,
    wherein the initial value of the predetermined threshold value is set corresponding to the sum of the absolute values of the difference values between values of pixels of the same picture and the mean value of the pixels thereof.

14. The record medium as set forth in claim 12,
    wherein the initial value of the predetermined threshold value is set corresponding to a residual at the origin.

15. The record medium as set forth in claim 12,
    wherein the initial value of the predetermined threshold value is set corresponding to the sum of the absolute values of the difference values between values of pixels of the same picture and the mean value of the pixels thereof and a residual at the origin.

16. The record medium as set forth in claim 12,
    wherein the predetermined threshold value is the minimum value of residuals that have been obtained so far.

17. A motion detecting apparatus, comprising:

    extracting means for extracting a plurality of macro blocks from a picture;
    first motion detecting means for detecting a moving vector of each of the plurality of macro blocks extracted by said extracting means;
    motion calculating means for calculating a moving vector of the entire picture with moving vectors of individual macro blocks detected by said first motion detecting means; and
    second motion detecting means for calculating a moving vector of each macro block with the moving vector calculated by said motion calculating means.

18. The motion detecting apparatus as set forth in claim 17,
    wherein said extracting means extracts a plurality of adjacent macro blocks.

19. The motion detecting apparatus as set forth in claim 17,

wherein said extracting means extracts a plurality of macro blocks from each of areas into which the entire picture is divided.

20. A motion detecting method, comprising the steps of:

(a) extracting a plurality of macro blocks from a picture;
(b) detecting a moving vector of each of the plurality of macro blocks that have been extracted;
(c) calculating a moving vector of the entire picture with moving vectors of individual macro blocks that have been detected; and
(d) calculating a moving vector of each macro block with the moving vector that have been calculated.

21. The motion detecting method as set forth in claim 20,
wherein step (a) is performed by extracting a plurality of adjacent macro blocks.

22. The motion detecting method as set forth in claim 20,
wherein step (a) is performed by extracting a plurality of macro blocks from each of areas into which the entire picture is divided.

23. A picture encoding apparatus, comprising:

motion detecting means for detecting a moving vector of a predetermined pixel block of input picture data and generating motion residual information;
determining means for comparing the motion residual information received from said motion detecting means with a predetermined value and generating a determined result;
picture data process means for performing a predetermined process for picture data, the predetermined process being required for an encoding process;
encoding means for performing the encoding process for picture data; and
controlling means for skipping the predetermined process performed by said picture data process means corresponding to the determined result of said determining means and causing said encoding means to perform the encoding process.

24. The picture encoding apparatus as set forth in claim 23,
wherein said motion detecting means calculates a mean discrete residual of each pixel block, and
wherein said determining means compares the mean discrete residual with the predetermined value.

25. The picture encoding apparatus as set forth in claim 23, further comprising:

value determining means for determining the predetermined value with information obtained in the encoding process,
wherein said determining means generates the determined result with the predetermined value determined by said value determining means.

26. A picture encoding method, comprising the steps of:

(a) detecting a moving vector of a predetermined pixel block of input picture data and generating motion residual information;
(b) comparing the motion residual information with a predetermined value and generating a determined result;
(c) performing a predetermined process for picture data, the predetermined process being required for an encoding process; and
(d) skipping the predetermined process corresponding to the determined result and performing the encoding process for the picture data.

27. The picture encoding method as set forth in claim 26,
wherein step (a) is performed by calculating a mean discrete residual of each pixel block, and
wherein step (b) is performed by comparing the mean discrete residual with the predetermined value.

28. The picture encoding method as set forth in claim 26, further comprising the step of:

determining the predetermined value with information obtained in the encoding process,
wherein step (b) is performed by generating the determined result with the predetermined value that has been determined.

29. A moving vector calculating method, comprising the steps of:

(a) extracting a block from a reference picture corresponding to a block of a current picture to be processed, the size of the block of the reference picture being the same as the size of the block of the current picture, the origin of the block of the reference picture matching the origin of the block of the current picture;
(b) while moving the block of the reference picture in a predetermined search area, obtaining a residual between the block of the current picture and the block of the reference picture;

(c) detecting a block with the minimum residual from the reference picture so as to calculate a moving vector;

(d) extracting N pixels of the curent picture and N pixels of the reference picture at a time (where N is an integer);

(e) storing the N pixels of the current picture and the N pixels of the reference picture as successive data to a memory; and

(f) reading pixels of the block of the current picture and pixels of the block of the reference picture as successive data from the memory so as to obtain a residual.

**30.** The vector calculating method as set forth in claim 29,

wherein the residual is calculated with an instruction that causes a plurality of successive data pieces to be processed at a time.

**31.** The vector calculating method as set forth in claim 29,

wherein N pixels of the current picture and N pixels of the reference picture are extracted checkerwise at a time.

**32.** A record medium on which a moving vector calculating program has been recorded, the moving vector calculating program causing a system that has the record medium to perform the steps of:

(a) extracting a block from a reference picture corresponding to a block of a current picture to be processed, the size of the block of the reference picture being the same as the size of the block of the current picture, the origin of the block of the reference picture matching the origin of the block of the current picture;

(b) while moving the block of the reference picture in a predetermined search area, obtaining a residual between the block of the current picture and the block of the reference picture;

(c) detecting a block with the minimum residual from the reference picture so as to calculate a moving vector;

(d) extracting N pixels of the curent picture and N pixels of the reference picture at a time (where N is an integer);

(e) storing the N pixels of the current picture and the N pixels of the reference picture as successive data to a memory; and

(f) reading pixels of the block of the current picture and pixels of the block of the reference picture as successive data from the memory so as to obtain a residual.

**33.** The record medium as set forth in claim 32, wherein the residual is calculated with an instruction that causes a plurality of successive data pieces to be processed at a time.

**34.** The record medium as set forth in claim 32, wherein N pixels of the current picture and N pixels of the reference picture are extracted checkerwise at a time.

**35.** A moving vector calculating method, comprising the steps of:

(a) extracting a block from a reference picture corresponding to a block of a current picture to be processed, the size of the block of the reference picture being the same as the size of the block of the current picture, the origin of the block of the reference picture matching the origin of the block of the current picture;

(b) while moving the block of the reference picture in a predetermined search area, obtaining a residual between the block of the current picture and the block of the reference picture;

(c) detecting a block with the minimum residual from the reference picture so as to calculate a coarse moving vector;

(d) while moving the block of the reference picture in the vicinity of the coarse moving vector obtained at step (c), obtaining a residual between the block of the current picture and the block of the reference picture;

(e) detecting a block with the minimum residual from the reference picture so as to detect a fine moving vector;

(f) storing pixels of the current picture and pixels of the reference picture to a first memory;

(g) extracting N pixels of the current picture and N pixels of the reference picture at a time (where N is an integer); and

(h) storing the N pixels of the current picture and the N pixels of the reference picture as successive data to a second memory,

wherein step (c) is performed with the N pixels of the current picture and the N pixels of the reference picture stored as successive data in the second memory, and

wherein step (e) is performed with the pixels of the current picture and the pixels of the reference picture stored in the first memory.

**36.** The moving vector calculating method as set forth in claim 35,

wherein the residual is calculated with an instruction that causes a plurality of successive data pieces to be processed at a time.

**37.** The moving vector calculating method as set forth in claim 35,

wherein N pixels of the current picture and N pixels of the reference picture are extracted checkerwise at a time.

38. A record medium on which a moving vector calculating program has been recorded, the moving vector calculating program causing a system that has the record medium to perform the steps of:

(a) extracting a block from a reference picture corresponding to a block of a current picture to be processed, the size of the block of the reference picture being the same as the size of the block of the current picture, the origin of the block of the reference picture matching the origin of the block of the current picture;
(b) while moving the block of the reference picture in a predetermined search area, obtaining a residual between the block of the current picture and the block of the reference picture;
(c) detecting a block with the minimum residual from the reference picture so as to calculate a coarse moving vector;
(d) while moving the block of the reference picture in the vicinity of the coarse moving vector obtained at step (c), obtaining a residual between the block of the current picture and the block of the reference picture;
(e) detecting a block with the minimum residual from the reference picture so as to detect a fine moving vector;
(f) storing pixels of the current picture and pixels of the reference picture to a first memory;
(g) extracting N pixels of the current picture and N pixels of the reference picture at a time (where N is an integer); and
(h) storing the N pixels of the current picture and the N pixels of the reference picture as successive data to a second memory,
wherein step (c) is performed with the N pixels of the current picture and the N pixels of the reference picture stored as successive data in the second memory, and
wherein step (e) is performed with the pixels of the current picture and the pixels of the reference picture stored in the first memory.

39. The record medium as set forth in claim 38, wherein the residual is calculated with an instruction that causes a plurality of successive data pieces to be processed at a time.

40. The record medium as set forth in claim 38, wherein N pixels of the current picture and N pixels of the reference picture are extracted checkerwise at a time.

41. A moving vector calculating method, comprising the steps of:

(a) extracting a block from a reference picture corresponding to a block of a current picture to be processed, the size of the block of the reference picture being the same as the size of the block of the current picture, the origin of the block of the reference picture matching the origin of the block of the current picture;
(b) while moving the block of the reference picture in a predetermined search area, obtaining a residual between the block of the current picture and the block of the reference picture;
(c) detecting a block with the minimum residual from the reference picture so as to calculate a moving vector; and
(d) comparing contour pixels of the block of the reference picture with contour pixels of the block of the current picture so as to obtain a residual therebetween.

42. The moving vector calculating method as set forth in claim 41,
wherein step (d) includes the steps of:

cumulating the absolute values of the difference values between the upper contour pixels of the block of the current picture and the upper contour pixels of the block of the reference picture in a horizontal scanning direction so as to obtain the sum thereof;
cumulating the absolute values of the difference values between the left contour pixels of the block of the current picture and the left contour pixels of the block of the reference picture in a vertical scanning direction so as to obtain the sum thereof;
cumulating the absolute values of the difference values between the right contour pixels of the block of the current picture and the right contour pixels of the block of the reference picture in a vertical scanning direction so as to obtain the sum thereof; and
cumulating the absolute values of the difference values between the lower contour pixels of the block of the current picture and the lower contour pixels of the block of the reference picture in a horizontal scanning direction so as to obtain the sum thereof.

43. A record medium on which a moving vector calculating program has been recorded, the moving vector calculating program causing a system that has the record medium to perform the steps of:

(a) extracting a block from a reference picture corresponding to a block of a current picture to be processed, the size of the block of the reference picture being the same as the size of the block of the current picture, the origin of the block of the reference picture matching the origin of the block of the current picture;

(b) while moving the block of the reference picture in a predetermined search area, obtaining a residual between the block of the current picture and the block of the reference picture;

(c) detecting a block with the minimum residual from the reference picture so as to calculate a moving vector; and

(d) comparing contour pixels of the block of the reference picture with contour pixels of the block of the current picture so as to obtain a residual therebetween.

**44.** The record medium as set forth in claim 43 wherein step (d) includes the steps of:

cumulating the absolute values of the difference values between the upper contour pixels of the block of the current picture and the upper contour pixels of the block of the reference picture in a horizontal scanning direction so as to obtain the sum thereof;

cumulating the absolute values of the difference values between the left contour pixels of the block of the current picture and the left contour pixels of the block of the reference picture in a vertical scanning direction so as to obtain the sum thereof;

cumulating the absolute values of the difference values between the right contour pixels of the block of the current picture and the right contour pixels of the block of the reference picture in a vertical scanning direction so as to obtain the sum thereof; and

cumulating the absolute values of the difference values between the lower contour pixels of the block of the current picture and the lower contour pixels of the block of the reference picture in a horizontal scanning direction so as to obtain the sum thereof.

*Fig. 1*

EP 0 973 336 A2

# Fig. 2

EP 0 973 336 A2

# Fig. 3

EP 0 973 336 A2

# Fig. 4

RAM — 4, 3

ROM — 2

CPU — 1

BRIDGE — 5

6

IEEE 1394 CONTROLLER — 10

IDE CONTROLLER — 7

HDD CD — 11

SCSI CONTROLLER — 8

HDD CD — 12

GRAPHICS ACCELERATOR — 9

DISPLAY — 13

BRIDGE — 14

PARALLEL CONTROLLER — 18

RS232C CONTROLLER — 19

15

FD CONTROLLER — 17

FDD — 21

INPUT DEVICE CONTROLLER — 16

KEYBOARD/ MOUSE — 20

# Fig. 5

```
                        ( START )
                            |
                            v
                   +-----------------+
                   |  READ PICTURE   |----- S1
                   +-----------------+
                            |
                            v
                   +-----------------+
                   |   CALCULATE     |----- S2
                   |  MOVING PICTURE |
                   +-----------------+
                            |
                            v           S3
          I          < PREDICTION >          B
    +--------------- <   MODE?    > ---------------+
    |                  \        /                  |
    |                      | P                     |
    v                      v                       v
S4  +-------------+   S8 +-------------+   S14 +-------------+
    | INTRA-FRAME |      |READ REFERENCE|      |READ REFERENCE|
    |     DCT     |      |   PICTURE    |      |   PICTURE    |
    +-------------+      +-------------+      +-------------+
         |                    |                    |
         v                    v                    v
S5  +-------------+   S9 +-------------+   S15 +-------------+
    | QUANTIZING  |      |   MOTION-    |      |   MOTION-    |
    +-------------+      | COMPENSATING |      | COMPENSATING |
         |              +-------------+      +-------------+
         v                    |                    |
S6  +-------------+           v                    v
    |VARIABLE LENGTH|  S10 +-------------+   S16 +-------------+
    |CODE ENCODING  |      |   FORWARD    |      | BIDIRECTIONAL |
    +-------------+      |DIFFERENCE DCT|      |DIFFERENCE DCT |
         |              +-------------+      +-------------+
         v                    |                    |
S7  +-------------+           v                    v
    |STORE REFERENCE|  S11 +-------------+   S17 +-------------+
    |   PICTURE     |      | QUANTIZING  |      | QUANTIZING  |
    +-------------+      +-------------+      +-------------+
         |                    |                    |
         |                    v                    v
         |            S12 +-------------+   S18 +-------------+
         |                |VARIABLE LENGTH|      |VARIABLE LENGTH|
         |                |CODE ENCODING  |      |CODE ENCODING  |
         |                +-------------+      +-------------+
         |                    |                    |
         |                    v                    |
         |            S13 +-------------+          |
         |                |STORE REFERENCE|        |
         |                |   PICTURE     |        |
         |                +-------------+          |
         |                    |                    |
         +--------------------+--------------------+
```

# Fig. 6

# Fig. 7

CBLK

TBLK-C1          TBLK-C2

TBLK-C3          TBLK_C4

# Fig. 8

Fig. 9

# Fig. 10

# Fig. 11

# Fig. 12

## *Fig. 13*

## *Fig. 14*

# Fig. 15

```
              ┌─────────┐
              │  START  │
              └─────────┘
                   │
                   ▼
      ┌──────────────────────────┐
      │  INITIALLY SET SEARCH AREA │  ──  S21
      └──────────────────────────┘
                   │
                   ▼
      ┌──────────────────────────┐
      │        OBTAIN MAD         │  ──  S22
      └──────────────────────────┘
                   │
                   ▼
      ┌──────────────────────────┐
      │      OBTAIN AD (0,0)      │  ──  S23
      └──────────────────────────┘
                   │
                   ▼
      ┌──────────────────────────┐
      │  OBTAIN ADmin WITH MAD    │  ──  S24
      │      AND AD (0,0)         │
      └──────────────────────────┘
                   │
                   ▼
      ┌──────────────────────────┐
      │    SET POSITION OF BLOCK   │  ──  S25
      └──────────────────────────┘
                   │
                   ▼
      ┌──────────────────────────┐
      │   PERFORM BLOCK MATCHING   │  ──  S26
      │          PROCESS          │
      └──────────────────────────┘
                   │
                   ▼
              IS AD                    AD ≧ ADmin
S27 ──   SMALLER THAN   ───────────────────┐
              ADmin?                        │
                   │                        │
              AD < ADmin                    │
                   ▼                        │
S28 ──      ┌──────────────┐                │
            │  ADmin = AD  │                │
            └──────────────┘                │
                   │                        │
                   ▼                        │
S29 ──      ┌──────────────┐                │
            │ CALCULATE MV │                │
            └──────────────┘                │
                   │                        │
                   ▼◄───────────────────────┘
      ┌──────────────────────────┐
      │   SET NEXT BLOCK POSITION  │  ──  S30
      └──────────────────────────┘
                   │
                   ▼
        NO      LAST BLOCK?              ──  S31
      ┌────────────────────────────────
      │            │
      │           YES
      │            ▼
      │  ┌──────────────────────────┐
      │  │      STORE RESULT         │  ──  S32
      │  └──────────────────────────┘
      │            │
      │            ▼
      │       ┌─────────┐
      │       │   END   │
      │       └─────────┘
```

# Fig. 16

```
        ( BLOCK MATCHING PROCESS )
                    |
                    v
        INITIALLY SET PIXEL POSITION      ~ S41
                    |
                    v
            INITIALLY SET AD              ~ S42
                    |
                    v
         CALCULATE RESIDUAL AD
    S43 ~ BETWEEN BLOCK OF CURRENT
         FRAME AND BLOCK OF
         REFERENCE FRAME
                    |
                    v
    S44 ~    IS AD LARGER            AD > ADmin
             THAN ADmin?
                    |
                AD ≦ ADmin
                    v
     NO      ALL PIXELS              ~ S45
             CALCULATED?
                    |
                  YES
                    v
              ( RETURN )
```

## Fig. 17

(0, 0)

MV(x, y)

31 BLOCK OF REFERENCE FRAME

32 BLOCK CURRENT FRAME

Fig. 18A          Fig. 18B          Fig. 18C

EP 0 973 336 A2

Fig. 19A

Fig. 19B

# Fig. 20

21A MEMORY AREA

21B MEMORY AREA

21C MEMORY AREA

21D MEMORY AREA

21E MEMORY AREA

21F MEMORY AREA

STORE ALL PIXELS

22A MEMORY AREA

22B MEMORY AREA

22C MEMORY AREA

THIN OUT PIXELS
CHECKERWISE AND STORE
THEM AS SUCCESSIVE DATA

## Fig. 21

| TIME POINT | T1 | T2 | T3 | T4 | T5 | T6 | T7 | T8 | T9 |
|---|---|---|---|---|---|---|---|---|---|
| MEMORY AREA 21A | F1 | F1 | F1 | F1 | F1 | F1 | F7 | F7 | F7 |
| MEMORY AREA 21B | | F2 | F2 | F2 | F2 | F2 | F2 | F8 | F8 |
| MEMORY AREA 21C | | | F3 | F3 | F3 | F3 | F3 | F3 | F9 |
| MEMORY AREA 21D | | | | F4 | F4 | F4 | F4 | F4 | F4 |
| MEMORY AREA 21E | | | | | F5 | F5 | F5 | F5 | F5 |
| MEMORY AREA 21F | | | | | | F6 | F6 | F6 | F6 |
| MEMORY AREA 22A | | | | f1 | f1 | f1 | f7 | f7 | f7 |
| MEMORY AREA 22B | | | | f4 | f4 | f4 | f4 | f4 | f4 |
| MEMORY AREA 22C | | | | | f2 | f3 | f3 | f5 | f6 |
| OPERATION | ENCODE P1 | | . | ENCODE P4 | ENCODE P2 | ENCODE P3 | ENCODE P7 | ENCODE P5 | ENCODE P6 |

EP 0 973 336 A2

# *Fig. 22*

```
          ( START )
              │
              ▼
  ┌─────────────────────────┐
  │ STORE PICTURE DATA AND   │ ～ S121
  │ CHECKERWISE PICTURE DATA │
  └─────────────────────────┘
              │
              ▼
         ◇─────────◇              YES
S122 ～ ◇ LAST BLOCK? ◇──────────────┐
         ◇─────────◇                 │
              │ NO                    │
              ▼                       │
  ┌─────────────────────────┐        │
  │  SEARCH MOVING VECTOR    │ ～ S123 │
  │    AT TWO PIXEL STEP     │        │
  └─────────────────────────┘        │
              │                       │
              ▼                       │
  ┌─────────────────────────┐        │
  │  SEARCH MOVING VECTOR    │ ～ S124 │
  │    AT ONE PIXEL STEP     │        │
  └─────────────────────────┘        │
              │                       │
              ▼                       │
  ┌─────────────────────────┐        │
  │      STORE RESULT        │ ～ S125 │
  └─────────────────────────┘        │
              │                       │
              ▼                       │
  ┌─────────────────────────┐        │
  │ INCREMENT BLOCK NUMBER   │ ～ S126 │
  └─────────────────────────┘        │
              │                       │
              ▼                       │
            ( END )◄─────────────────┘
```

# Fig. 23

```
      ┌─────────────────────────────┐
      │  COARSE SEARCHING PROCESS   │
      │    (AT TWO PIXEL STEP)      │
      └─────────────────────────────┘
                    │
                    ▼
      ┌─────────────────────────────┐
      │      SET START POINT        │──── S131
      └─────────────────────────────┘
                    │
                    ▼
      ┌─────────────────────────────┐
      │    RESET VERTICAL SEARCH    │──── S132
      │       START POSITION        │
      └─────────────────────────────┘
```

S141   YES

STORE MV

END

LOWER END? ──── S133

NO

RESET HORIZONTAL SEARCH START POSITION ──── S134

S135 ── RIGHT END?   YES

S140

NO

S136 ── PERFORM BLOCK MATCHING PROCESS WITH CHECKERWISE BLOCK (8 × 16 PIXELS)

MOVE BLOCK FOR TWO PIXELS IN VERTICAL DIRECTION (INCREMENT ADDRESS FOR TWO POSITIONS IN VERTICAL DIRECTION)

S137 ── $AD < ADmin?$   NO

YES

S138 ── $ADmin = AD;$ $MV = CURRENT\ POSITION$

S139 ── MOVE BLOCK FOR TWO PIXELS IN HORIZONTAL DIRECTION (INCREMENT ADDRESS FOR ONE POSITION IN HORIZONTAL DIRECTION)

53

# Fig. 24

```
          ╭─────────────────────────╮
          │  FINE SEARCH PROCESS AT │
          │     ONE PIXEL STEP      │
          ╰─────────────────────────╯
                      │
                      ▼
          ┌─────────────────────────┐
          │     SET START POINT     │───S151
          └─────────────────────────┘
                      │
                      ▼
          ┌─────────────────────────┐
          │ RESET VERTICAL POSITION │───S152
          └─────────────────────────┘
                      │
                      ▼
   YES          ◇ LOWER END? ◇───S153
    │
    ▼                │ NO
 ╭───────╮           ▼
 │  END  │    ┌─────────────────┐
 ╰───────╯    │ RESET HORIZONTAL│───S154
              │    POSITION     │
              └─────────────────┘
                      │
                      ▼
              ◇              ◇        YES
   S155───   ◇  RIGHT END?   ◇──────────┐
              ◇              ◇          │         S160
                      │ NO              ▼
                      ▼        ┌──────────────────────────┐
           ┌──────────────────┐│ MOVE BLOCK FOR ONE PIXEL IN│
  S156 ─── │  PERFORM BLOCK   ││   VERTICAL DIRECTION       │
           │ MATCHING PROCESS ││ (INCREMENT ADDRESS BY ONE  │
           │ FOR BLOCK OF     ││   POSITION IN VERTICAL     │
           │ (16 × 16) PIXELS ││      DIRECTION)            │
           └──────────────────┘└──────────────────────────┘
                      │
                      ▼                    NO
  S157 ───   ◇  AD < ADmin?  ◇──────────────┐
                      │ YES                 │
                      ▼                      │
           ┌──────────────────┐             │
  S158 ─── │    ADmin = AD;   │             │
           │ MV = CURRENT     │             │
           │    POSITION      │             │
           └──────────────────┘             │
                      │                      │
                      ◄──────────────────────┘
                      ▼
           ┌──────────────────────┐
           │ MOVE BLOCK FOR ONE   │
           │ PIXEL IN HORIZONTAL  │
           │ DIRECTION (INCREMENT │───S159
           │ ADDRESS BY ONE       │
           │ POSITION IN          │
           │ HORIZONTAL DIRECTION)│
           └──────────────────────┘
```

# Fig. 25

P(Hr,Vr)
P(Hr+1,Vr)
P(Hr+15,Vr)
P(Hc,Vc),P(Hc+1,Vc)
P(Hr,Vr+1)
P(Hc+15,Vc)
P(Hr+15,Vr+1)
P(Hc,Vc+1)
P(Hc+15,Vc+1)
P(Hr,Vr+14)
P(Hr,Vr+15)
P(Hr+15,Vr+14)
P(Hr+15,Vr+15)
BLOCK OF REFERENCE FRAME
P(Hc,Vc+14)
P(Hc+15,Vc+14)
P(Hc,Vc+15)
BLOCK OF CURRENT FRAME
P(Hc+15,Vc+15)

EP 0 973 336 A2

# Fig. 26

START

AD=0 — S221

INITIALIZE
Hc,Hr,Vc, AND Vr — S222

O = 0 — S223

AD+=|P(Hr+O,Vr)−
P(Hc+O,Vc)| — S224

O=O+1 — S225

O<16 — S226
YES / NO

O=1 — S227

AD+=|P(Hr,Vr+O)−
P(Hc,Vc+O)|+
|P(Hr+15,Vr+O)−
P(Hc+15,Vc+O)| — S228

O=O+1 — S229

O<15 — S230
YES / NO

O=1 — S231

AD+=|P(Hr+O,Vr+15)−
P(Hc+O,Vc+15)| — S232

O=O+1 — S233

O<16 — S234
YES / NO

END

## Fig. 27

EP 0 973 336 A2

# Fig. 28

MACRO BLOCK

# Fig. 29

A

B

C

## Fig. 30

```
                    ( INPUT PICTURE )~ S301
      GENERATE GLOBAL VECTOR          GENERATE MOVING VECTOR

S302 ~  PERFORM EXTRACTING
            PROCESS

S303 ~  DETECT MOTION IN
            PRE-STAGE

S304 ~  GENERATE GLOBAL    GLOBAL VECTOR    DETECT MOTION  ~ S305
            VECTOR

                                           GENERATE MOVING
                                           VECTOR OF EACH   ~ S306
                                            MACRO BLOCK
```

Fig. 31

EP 0 973 336 A2

## Fig. 32

S401 ⌇ ( INPUT PICTURE )

S402 ⌇ | DETECT MOTION |

S403 ⌇ < AD < PREDETERMINED VALUE? > ──YES──┐

NO

S404 ⌇ | COMPENSATE MOTION |     S407 ⌇ | SET "0" TO COEFFICIENT |

S405 ⌇ | DCT |

S406 ⌇ | QUANTIZING |

S408 ⌇ | DETERMINE WHETHER OR NOT CBP = 0 |

S409 ⌇ | PERFORM HEADER PROCESS, VLC CODE GENERATING PROCESS, ETC |